# EUROPEAN PATENT SPECIFICATION

(11) **EP 1 821 288 B1**
(45) Date of publication and mention of the grant of the patent: **31.12.2008**
(21) Application number: 06252788.2
(22) Date of filing: 30.05.2006
(51) Int. Cl.: G11B 5/127, G11B 11/105, G12B 21/06

(54) **Magnetic head and information storage apparatus**
Magnetkopf und Informationsspeichervorrichtung
Tête magnétique et appareil de stockage d'informations

(30) Priority: 15.02.2006 JP 2006037482
(43) Date of publication of application: 22.08.2007
(73) Proprietor: FUJITSU LIMITED, Kawasaki-shi, Kanagawa 211-8588 (JP)
(72) Inventor: Tawa, Fumihiro, c/o Fujitsu Limited, Kawasaki-shi Kanagawa 211-8588 (JP); Hasegawa, Shinya, c/o Fujitsu Limited, Kawasaki-shi Kanagawa 211-8588 (JP)
(74) Representative: Wilding, Frances Ward

(56) References cited:
- EP-A- 1 067 515
- US-A1- 2003 128 634
- US-A1- 2004 081 031
- US-A1- 2005 122 850

## Description

### BACKGROUND OF THE INVENTION

### Field of the Invention

The present invention relates to a magnetic head that applies light and magnetic fields to information storage media, and relates to an information storage apparatus that makes information access to information storage media using light and magnetic fields.

### Description of the Related Art

With the development of the information processing society, the amount of information is ever increasing. As the amount of information increases, there is the demand for developments of information recording methods and information storage devices with drastically high recording densities. Magnetic disks, on which information is accessed using magnetic fields, have received attention as rewritable high-density recording media and are being actively studied and developed with the aim of further increasing the density.

One known method for recording information on a magnetic disk at a high density is the thermally-assisted recording method in which a magnetic head with a magnetic pole that produces magnetic fields and light radiation means that radiates light are used to irradiate the magnetic disk with light so that the temperature of the recording film approaches the Curie point and, in this state, magnetic fields are applied to the recording film so as to direct the magnetization of the recording film to a direction according to information, thereby recording the information.

In the thermally-assisted recording method, if an area irradiated with light is wider than an area to which a magnetic field is applied, tracks on the magnetic disk adjacent to the area to which the magnetic field is being applied to write information is also heated and information previously written in those tracks can be corrupted. On the other hand, engineers are trying to increase the capacity of magnetic disks themselves by reducing the recording area (bit size) for recording one bit of information. There are demands for accurately irradiating tiny write areas with light to reliably heat only the write areas. In these days, near-field light radiated from a tiny aperture smaller than the wavelength of light is used to produce an irradiation spot smaller than the wavelength to heat a write area, rather than directly applying light emitted from a light source to the write area.

With regard to the technique using near-field light mentioned above, there have been proposed techniques such as: a technique in which a tiny aperture is provided adjacently to a magnetic pole which produces magnetic fields and light is transmitted to the tiny aperture through a light waveguide to provide near-field light (for example see Japanese Patent Laid-Open No. 2003-6803 and No. 2002-298302); a technique in which two triangular magnetic poles are placed in the form of a bow tie with a tiny gap between them and the gap is irradiated with light using an optical fiber to provide near-field light (for example see Japanese Patent Laid-Open No. 2003-195002) ; and a technique in which a magnetic pole and a magnetic disk separated by a tiny gap are provided, and light is applied to the gap to produce near-field light (for example see Japanese Patent Laid-Open NO. 2000-67901). According to the techniques described in Japanese Patent Laid-Open No. 2003-6803, No. 2002-298302, No. 2000-195002, and No. 2003-67901, tiny areas can be irradiated with near-field light, thereby avoiding information corruption mentioned above.

Light waveguides that consist of a core through which light is transmitted and a clad that surrounds the core and confines the light are commonly used for transmitting light. In order to transmit light efficiently, the core and the clad must be formed to a thickness greater than the wavelength of the light. As a result, a problem arises that the center of an area irradiated with light is 1.5 wavelengths or more away from the center of the write area to which a magnetic field is applied, even though the light waveguide is provided adjacently to the magnetic pole.

The technique described in Japanese Patent Laid-Open No. 2000-195002 can precisely apply light to an area to which a magnetic field is applied. However, the efficiency of generation of near-field light is poor because the magnetic poles are provided in the form of a bow tie. Another problem with the technique is that the intensity of magnetic fields produced by the magnetic poles lowers because the thickness of magnetic poles formed must be as thin as several nanometers in order to generate near-field light in the gap between the magnetic pole and the magnetic disk.

The techniques described in Japanese Patent Laid-Open No. 2003-6803, No. 2002-298302, and No. 2000-195002 require extensive changes to processes of manufacturing conventional magnetic information storage devices in which information access is performed by using only magnetic fields without applying light, in order to manufacture magnetic information storagedevices that use thermally-assisted recording method, because the shape of magnetic poles are changed and a light waveguide is provided in a small space.

On the other hand, the technique described in Japanese Patent Laid-Open No. 2003-67901 only requires that a magnetic head used in a conventional magnetic information storage device be provided closer to the magnetic disk and means for applying light to the gap between the magnetic head and the magnetic disk be provided outside the magnetic head. Therefore, processes for manufacturing conventional magnetic information storage devices can be used. In magnetic information storage devices, the magnetic disk is typically scanned along the tracks. The direction in which the magnetic head moves with respect to the tracks is herein referred to as the track scan direction. In a magnetic head including a main magnetic pole that produces magnetic fluxes and an auxiliary magnetic pole for feeding magnetic fluxes back to the main magnetic pole, the auxiliary magnetic pole and the main magnetic pole are provided in this order from the forward end of the magnetic head along the track scan direction, and a recording magnetic field is formed in an area below the main magnetic pole in the forward part of the magnetic head in the track scan direction. In the technique described in Japanese Patent Laid-Open NO. 2003-67901, however, light cannot be applied from the forward in the track scan direction because the auxiliary magnetic pole is in the way of the application of light and therefore light may be applied from the backward in the track scan direction. In order to generate near-field light in an area where a recording magnetic field is formed in this configuration, the main magnetic pole must be sufficiently thin in the track scan direction. This decreased thickness would reduce the intensity of the magnetic field.

A further relevant prior art is US 2003/0128634 A1 used for the two-part delimitation of appended claim 1.

### SUMMARY OF THE INVENTION

The present invention has been made in view of the above circumstances and provides a magnetic head and an information storage apparatus capable of applying light to near a position to which a magnetic field is applied, without reducing the intensity of the magnetic field, as disclosed in the appended claims.

A magnetic head that solves the problems stated above includes: a magnetic pole which emits a magnetic flux from an end; an optical component for producing near-field from an end thereof, the optical component will be hereafter referred to as optical pole, which has an end aligned with the end of the magnetic pole and has a refractive index different from the refractive index of the magnetic pole; and a light applying section that applies light to the end of the optical pole sideways.

In the magnetic head according to the present invention, the magnetic pole and optical pole that have mutually different refractive indexes are in contact with each other, light applied from the light applying section to the optical pole is efficiently transformed into near-field light because of the difference between their refractive indexes, and the near-field light is emitted from the optical pole. Therefore, the light does not need to be guided by using a light waveguide to a position close to the optical and magnetic poles and accordingly the size of the optical pole can be reduced. Thus the position to which a magnetic field is applied and the position to which light is applied can be brought sufficiently close to each other. Furthermore, the optical pole is so tiny that it can be provided in a gap left. Therefore, the magnetic head for an information storage apparatus employing a thermally assisted recording method can be fabricated, simply by adding a step for forming the optical pole using processing such as thin-film formation to processes for manufacturing a magnetic head for conventional magnetic information storage devices without making any maj or modifications to the process.

The magnetic head according to the present invention preferably includes a filling section which fills at least the optical-pole-side portion of the space between the light applying section and the end of the optical pole and has a refractive index different from any of the refractive index of the magnetic pole and the refractive index of the optical pole.

The provision of the filling section ensures the generation of near-field light.

In the magnetic head according to the present invention, the end of the optical pole and the end of the magnetic pole are preferably positioned aligned with each other in the direction along tracks on a recording medium.

Making the end of the optical pole and that of the magnetic pole aligned with each other along the tracks on the recording medium ensures heating by light only the track to which a magnetic field.

In the magnetic head according to the present invention, preferably the width of the end of the optical pole in the direction along the tracks on the recording medium is less than the wavelength of light applied by the light applying section.

With the magnetic head in the preferable mode, light can be reliably applied to a position close to the position to which a magnetic field is applied.

In the magnetic head according to the present invention, the width of the end of the optical pole in the direction across the tracks on the recording medium is preferably less than or equal to the width of the end of the magnetic pole.

Because the width of the end of the optical pole in the direction across the tracks is smaller than the width of the end of the magnetic pole, tracks adjacent to the position on the recording medium to which a magnetic filed is applied can be prevented from being heated.

In the magnetic head according to the present invention, the optical pole preferably includes a layer of a high-refractive-index material having a refractive index higher than the refractive index of the magnetic pole and a layer of a low-refractive-index material having a refractive index lower than the refractive index of the magnetic pole, the layers of the high-refractive-index material and low-refractive index material being stacked in the direction along the tracks on the recording medium.

Because the layers of the high-refractive-index material and low-refractive-index material are stacked in the direction along the tracks, near-field light can be generated efficiently.

In the magnetic head according to the present invention, the optical pole preferably includes a layer of high-refractive-index material having a refractive index higher than the refractive index of the magnetic pole and a layer of a low-refractive-index material having a refractive index lower than the refractive index of the magnetic pole, the layers of the high-refractive-index material and the low-refractive-index material being stacked in the direction along the tracks on the recording medium, the layer of the high-refractive-index material being provided in a position in the optical pole that is nearer to the magnetic pole.

Because the high-refractive-index material is provided at a position closer to the magnetic pole, the peak of irradiation of near-field light can be brought further closer to the position to which a magnetic field is applied.

In the magnetic head according to the present invention, the optical pole preferably includes a layer of a high-refractive-index material having a refractive index higher than the refractive index of the magnetic pole sandwiched between layers of a low-refractive index material having a refractive index lower than the refractive index of the magnetic pole, the layers of the high-refractive-index material and the low-refractive-index material being stacked in the direction along the tracks on the recording medium.

Because the layer of the high-refractive-index material is provided between the layers of the low-refractive index material, near-field light can be generated efficiently with a simple configuration.

In the magnetic head according to the present invention, the optical pole preferably includes a layer of a high-refractive-index material having a refractive index higher than the refractive index of the magnetic pole that extends in the end of the optical pole along the end thereof and a layer of a low-refractive-index having a refractive index lower than the refractive index of the magnetic pole that surrounds the high-refractive-index material in all directions except the direction in which the layer of the high-refractive-index material extends.

Because the layer of the high-refractive-index material is surrounded by the layer of the low-refractive-index material, near-field light is generated efficiently.

The magnetic head according to the present invention, preferably includes a covering section of the optical pole which covers a side onto which light is applied by the light applying section, has a thickness less than the wavelength of the light, and has a refractive index lower than any of the refractive index of the magnetic pole and the refractive index of the filling section, wherein the filling section fills the space between the light applying section and the covering section.

Because the optical pole is covered with the covering section, the optical pole is protected and the efficiency of coupling using the difference between refractive indexes is improved and therefore near-field light is generated more efficiently.

In the magnetic head according to present invention, the portion of the optical pole onto which light is applied by the light applying section is preferably a flat surface.

In the magnetic head according to the present invention, light emitted from the light applying section is applied to the optical pole, rather than being transmitted through a light waveguide to the optical pole. Therefore, stray light of the near-field light can appear in a region other than the irradiation spot of the near-field light which is generated in the optical pole. However, because the surface of the portion of the optical pole onto which light is applied by the light applying section is flat, the occurrence of stray light is reduced.

In the magnetic head according to the present invention, a portion of the end of the magnetic pole is tapered down from the portion where light is applied to the optical pole.

Whereas a tinier magnetic pole end can apply a magnetic field to a smaller end, and therefore can record information more densely on the recording medium, miniaturization of the whole magnetic pole degrades the intensity of magnetic fields. Both of the recording density and the intensity of the magnetic fields can be increased by making the portion of the end of the magnetic pole closer to the recording medium thinner than the portion where the light pole is irradiated with light and the remaining portion thicker.

In the magnetic head according to the present invention, the light applying section preferably applies light polarized in the direction across the tracks on the recording medium.

If light were polarized in the direction along the tracks, the efficiency of generation of near-field light in the light pole would be decreased and stray light of the near-field light would increase. Therefore, the light polarized in the direction across the tracks is preferably applied to the optical pole.

In the magnetic head according to the present invention, the light applying section applies light in the direction across the tracks on the recording medium.

As described earlier, the end of the optical pole is preferably aligned with the end of the magnetic pole in the direction along the tracks. In this preferable arrangement, light is efficiently applied in the direction across the tracks.

The magnetic head according to the present invention, preferably includes a light leading section which takes in and leads light to the light applying section.

The light leading section effectively leads the light to the light applying section.

The magnetic head according to the present invention, preferably includes the light leading section having a grating which receives irradiation of light and takes in the light and a waveguide which guides the light taken in by the grating to the light applying section.

Even in an arrangement in which light is applied to the magnetic head slantwise, for example, rather than being applied from the front, the grating can efficiently lead the light to the light applying section. Thus, the degree of flexibility in designing the head can be increased.

The magnetic head according to the present invention preferably includes a mirror which reflects light, wherein the light applying section directly or indirectly applies light reflected by the mirror to the end of the optical pole.

The provision of the mirror enables the light to be applied to the optical pole even if the light applying section is installed inside the magnetic head.

The magnetic head according to the present invention preferably includes a Si mirror which is formed by etching a Si substrate and reflects light; and molded glass which fills the etched portion of the Si substrate; wherein the light applying section directly or indirectly applies light reflected by the Si mirror to the end of the optical pole.

The magnetic head in the preferred mode can be manufactured through a simplified manufacturing process.

An information storage apparatus that solves the problems stated above includes: a magnetic head which makes an access to an information recording medium by using light and a magnetic field; a medium supporting section which supports the information recording medium; and a head supporting section which supports the magnetic head and positions the magnetic head above the information recording medium; the magnetic head including: a magnetic pole which emits a magnetic flux from an end thereof; an optical pole which has an end aligned with the end of the magnetic pole and has a refractive index different from the refractive index of the magnetic pole; and a light applying section that applies light to the end of the optical pole sideways.

The information storage apparatus according to the present invention enables light to be applied to a position close to the position to which a magnetic field is applied and information to be written more densely on the information recording medium, without decreasing the intensity of the magnetic field.

While only a basic form of the information storage apparatus is given herein, the information storage apparatus as referred to herein is not limited to the basic form described above. The concept of the information storage apparatus as referred to herein includes various forms of information storage apparatuses adaptable to the various forms of magnetic heads described above.

A magnetic head according to the present invention includes: a magnetic field generating section which has a main magnetic pole, an auxiliary magnetic pole, and a coil; a terminal section of the coil; an optical pole which is provided between the main magnetic pole and the auxiliary magnetic pole and has a refractive index different from any of the refractive index of the main magnetic pole and the refractive index of the auxiliary magnetic pole; a light applying section which applies light to the end of the optical pole sideways; and a light leading section which takes in and leads light to the light applying section; wherein the magnetic field generating section, the terminal section, the optical pole, the light applying section, and the light leading section are provided on the same side of a given substrate.

An information storage apparatus according to the present invention includes: a magnetic head which makes an access to an information recording medium by using light and a magnetic field; a medium supporting section which supports the information recording medium; and a head supporting section which supports the magnetic head and positions the magnetic head above the information recording medium; the magnetic head including: a magnetic field generating section which has a main magnetic pole, an auxiliary magnetic pole, and a coil; a terminal section of the coil; an optical pole which is provided between the main magnetic pole and the auxiliary magnetic pole and has a refractive index different from any of the refractive index of the main magnetic pole and the refractive index of the auxiliary magnetic pole; a light applying section which applies light to the end of the optical pole sideways; and a light leading section which takes in and leads light to the light applying section; wherein the magnetic field generating section, the terminal section, the optical pole, the light applying section, and the light leading section are provided on the same side of a given substrate.

With the magnetic head and the information storage apparatus according to the present invention, highly precise information access can be achieved while preventing a reduction in the magnetic field intensity.

According to the present invention, a magnetic head and an information storage apparatus can be provided that are capable of applying light to a position close to the position to which a magnetic field is applied, without decreasing the intensity of the magnetic field.

### BRIEF DESCRIPTION OF THE DRAWINGS

Fig. 1 shows an information storage apparatus according to a first embodiment of the present invention;
Fig. 2 is an enlarged view of the end of a slider;
Fig. 3 schematically shows a configuration of a magnetic head provided on the slider;
Fig. 4 is a perspective view schematically showing the magnetic head;
Fig. 5 is a cross-sectional view of the magnetic head taken along the plane that is parallel to the track scan direction and passes through a main magnetic pole;
Fig. 6 is a diagram illustrating an exemplary process for cutting a magnetic pole and an optical component;
Fig. 7 shows a result of a simulation of an electromagnetic field intensity distribution according to the first embodiment of the present invention;
Fig. 8 is a graph showing a spot profile (intensity distribution) of near-field light on the same plane as that in Fig. 7;
Fig. 9 is a perspective view schematically showing a magnetic head according to a second embodiment of the present invention;
Fig. 10 is a cross-sectional view of the magnetic head taken along the plane that is parallel to the track scan direction and passes through a main magnetic pole;
Fig. 11 is a diagram schematically showing a configuration of the magnetic head viewed from the back in the track scan direction;
Fig. 12 shows a result of a simulation of an electromagnetic field intensity distribution according to the second embodiment of the present invention;
Fig. 13 schematically shows a configuration of a portion around the end of a main magnetic pole and an optical component of a magnetic head according to a third embodiment of the present invention;
Fig. 14 shows a result of a simulation of an electromagnetic field intensity distribution according to the third embodiment of the present invention;
Fig. 15 shows a result of a simulation of an electromagnetic field intensity distribution when thin films are formed only on both sides of the main magnetic pole and the optical component in the direction across the tracks;
Fig. 16 schematically shows a configuration of a magnetic head according to a fourth embodiment of the present invention, viewed from the magnetic disk;
Fig. 17 schematically shows a configuration of a main magnetic pole and an optical component of a magnetic head according to a fifth embodiment of the present invention;
Fig. 18 shows a result of a simulation of an electromagnetic field intensity distribution according to the fifth embodiment of the present invention; and
Fig. 19 shows a portion around the end of a slider according to a sixth embodiment of the present invention.

### DETAILED DESCRIPTION OF THE INVENTION

Embodiments of the present invention will be described with reference to the accompanying drawings.

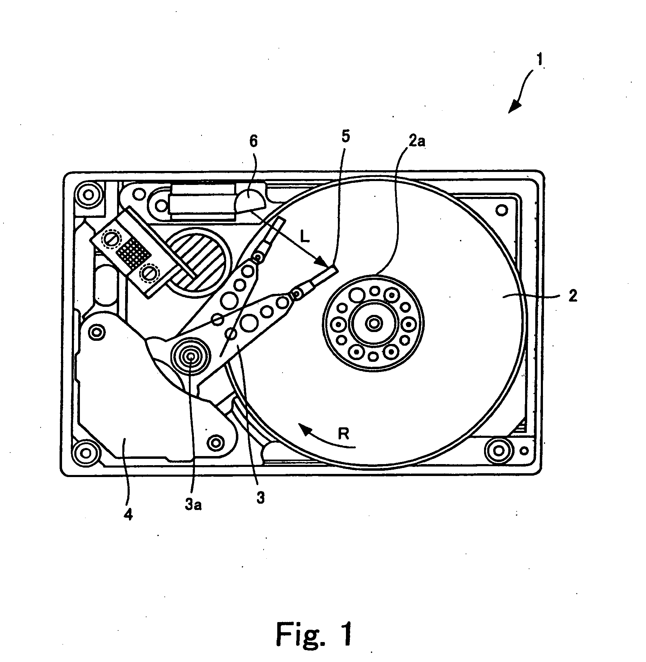

Fig. 1 shows an information apparatus according to a first embodiment of the present invention.

A laser-assisted magnetic recording-reproducing apparatus 1 shown in Fig. 1 represents the information storage apparatus according to the first embodiment of the present invention and incorporates a magnetic head of the first embodiment. Fig. 1 shows the laser-assisted magnetic recording-reproducing apparatus 1 with its housing removed to reveal its interior construction. The laser-assisted magnetic recording-reproducing apparatus 1 includes a magnetic disk 2 that rotates in the direction indicated by the arrow R and is supported by a rotating shaft 2a; a slider 5 provided with a magnetic head that writes and reads information on the magnetic disk 2, which will be described later; a light source 6 that emits light toward the slider 5, a carriage arm 3 that supports the slider 5, is pivoted at an arm shaft 3a, and moves along the surface of the magnetic disk 2; and an arm actuator 4 that drives the carriage arm 3. The interior space of the housing is sealed with a cover (not shown).

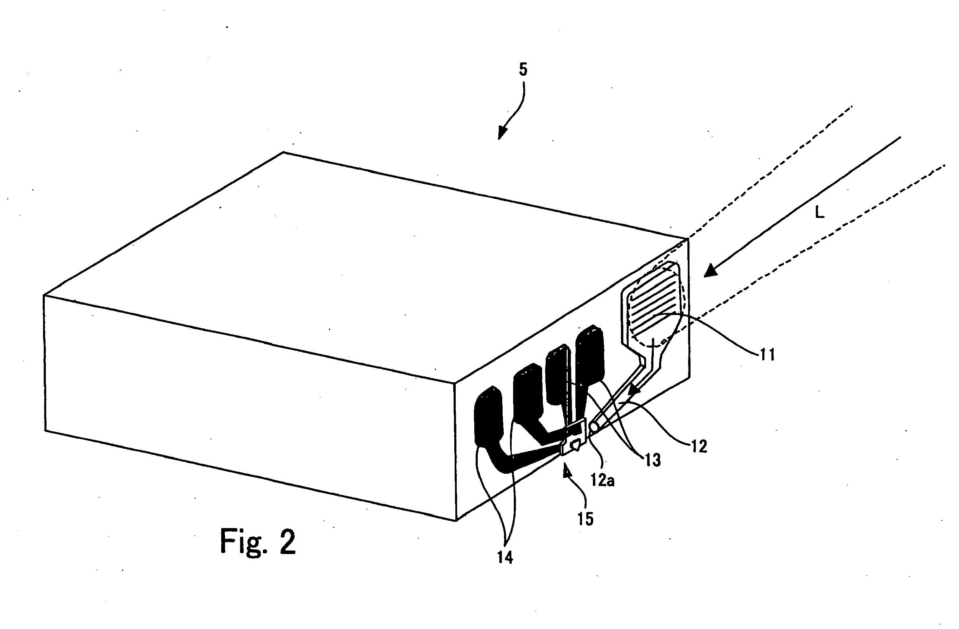

Fig. 2 showstheendoftheslider5andFig. 3 schematically shows a configuration of the magnetic head 15 mounted on the slider 5.

Provided at the end of the slider 5 are the magnetic head 15 which applies magnetic fields and light to the magnetic disk 2, a coupling grating 11 which receives light emitted from the light source 6, a light waveguide 12 which guides light received by the coupling grating 11 to a light applying aperture 12a provided near the magnetic head 15, reproduction pads 13 which output a reproduction signal generated by reading information recorded on the magnetic disc 2, and coil lead pads 14 for supplying a current to a coil provided in the magnetic head 15. Light emitted from the light source 6 is polarized by the coupling grating 11 and taken into the light waveguide 12, which ensures that the light is guided to the light applying aperture 12a. The light applying aperture 12a is one example of a light applying section as referred to in the present invention, the coupling grating 11 is one example of a grating section as referred to in the present invention, the light waveguide 12 is one example of a light waveguide referred to in the present invention, and the combination of the coupling grating 11 and the light waveguide 12 is one example of a light leading section as referred to in the present invention.

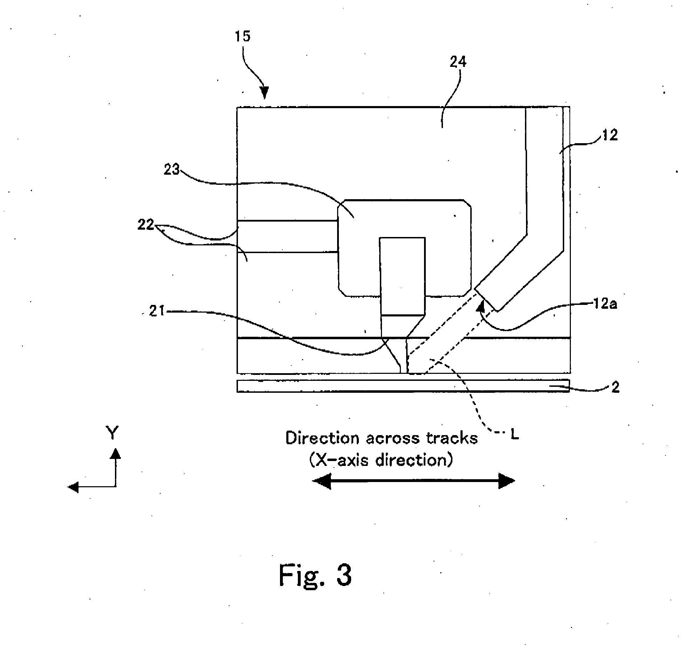

Rotation of the disk 2 in the direction indicated by the arrow R shown in Fig. 1 causes the magnetic head 15 to scan the magnetic disk 2 along the tracks in the direction opposite to the direction indicated by the arrow R (hereinafter the direction in which the magnetic disk 2 is scanned will be referred to as the track scan direction). Fig. 3 is a diagram of the magnetic head 15 viewed from the front in the direction indicated by the arrow R, that is, viewed from the back in the track scan direction. Provided on the magnetic head 15 are a main magnetic pole 21 which produces magnetic fluxes, a coil 23 from which a coil lead 22 extends, and an auxiliary magnetic pole 24 which picks up magnetic fluxes produced by the main magnetic pole 21 and feeds them back to the coil 23 and to the main magnetic pole 21, in this order from the back in the track scan direction. Provided forward of the auxiliary magnetic pole 24 is a reproducing head which detects magnetic fields by using a GMR film (giant magnetoresistive film) and reads information recorded on the magnetic disk 2. The reproducing head is not shown because the present invention is more characterized by information writing to the magnetic disk 2 than information reading from the magnetic disk 2.

To make information access to the magnetic disk 2, the arm actuator 4 shown in Fig. 1 drives the carriage arm 3, which positions the magnetic head 15 provided on the slider 5 precisely above a desired track on the rotating magnetic disk 2 by using the sample servo method. As the magnetic disk 2 rotates, the magnetic head 15 sequentially accesses miniature areas arranged in each track of the magnetic disk 2.

To record information on the magnetic disk 2, light emitted from the light source 6 is guided through the light waveguide 12 to the light applying aperture 12a and is applied to an optical component (described later) provided adjacent to and aligned with an end of the main magnetic pole 21, and near-field light which is generated when the light passes through the optical component is applied to miniature regions on the magnetic disk 2. When irradiated with the near-field light, a tiny area on the magnetic disk 2 is heated and, immediately after this, a recording magnetic field is applied by the main magnetic pole 21. As a result, the direction of magnetization of the recording film of the magnetic disk 2 is changed in accordance with information, and the information is recorded on the magnetic disk 2.

To reproduce information from the magnetic disk 2, the directions of magnetizations of tiny areas are detected with a GMR film (not shown) and an electric reproduction signal according to a magnetic field produced by each of the magnetizations is generated.

Access to the magnetic disk 2 is made basically as described above.

The magnetic head 15 will be described below in detail.

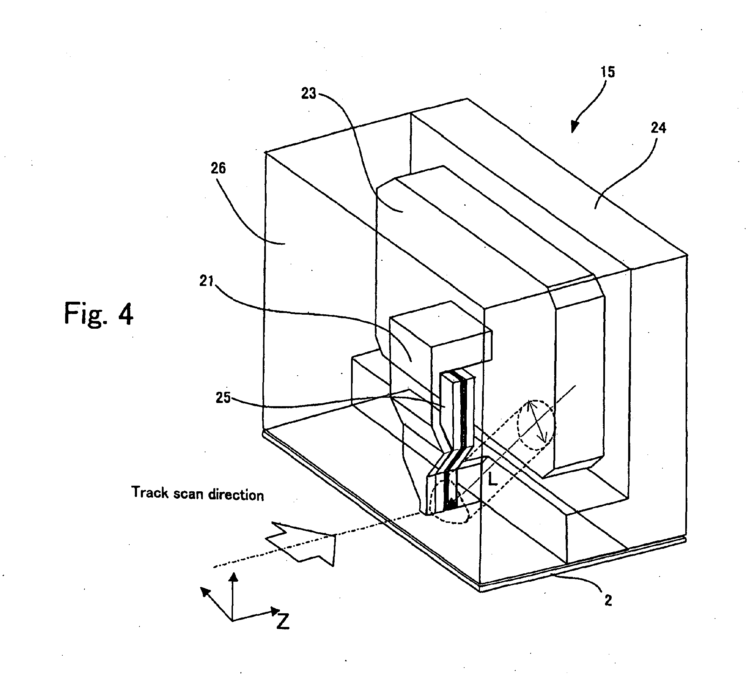

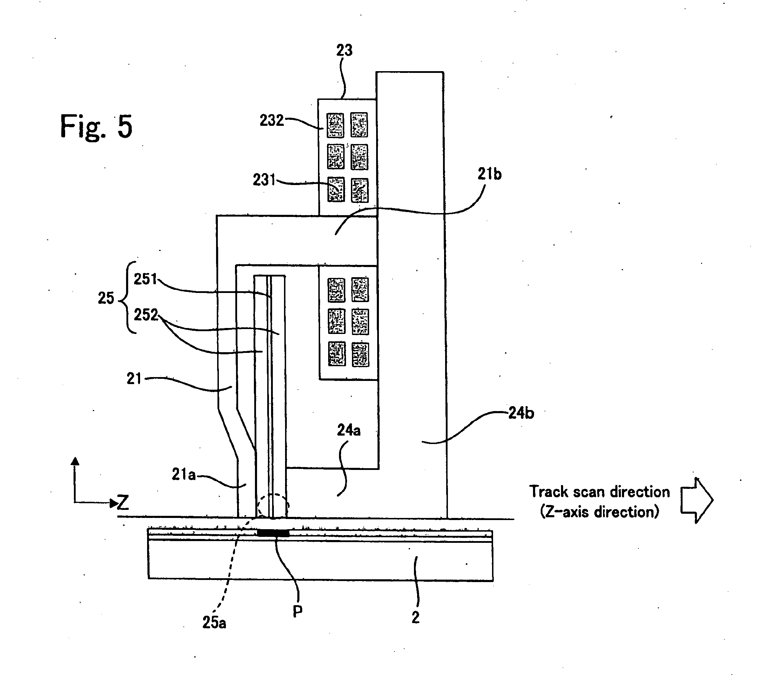

Fig. 4 is a perspective view schematically showing the magnetic head 15. Fig. 5 is a cross-sectional view of the magnetic head 15 taken along the plane that is parallel to the track scan direction and passes through the main magnetic pole 21. In the description that follows, the track scan direction is shown as the Z-axis, the radial direction across the tracks is shown as the X-axis, and the direction along the gap between the magnetic head 15 and the magnetic disk 2 is shown as the Y-axis.

As shown in Fig. 4, the auxiliary magnetic pole 24, coil 23, optical component 25, andmainmagnetic pole 21 are arranged in the magnetic head 15, in this order from the front in the track scan direction. The space in which these are provided is filled with a filling section 26. The main magnetic pole 21 represents an example of a magnetic pole as referred to in the present invention and the optical component 25 represents an example of an optical pole as referred to in the present invention. The filling section 26 represents an example of a filling section as referred to in the present invention.

The main magnetic pole 21 and the auxiliary magnetic pole 24 are made of a magnetic material such as a Fe-Co base alloy or a Fe-Ni base alloy. As shown in Fig. 5, the auxiliary magnetic pole 24 is made up of a parallel portion 24a parallel to the magnetic disk 2 and a vertical portion 24b which is perpendicular to the magnetic disk 2 and orthogonal to the track scan direction. The front end 21a of the main magnetic pole 21 faces the magnetic disk 2 and the back end 21b is connected to the vertical portion 24b of the auxiliary magnetic pole 24. The coil 23 made of a spiral of a conductor 231 (for example copper) filled with an insulating material 232 (for example alumina) is attached to the main magnetic pole 21. Consequently, the main magnetic pole 21 constitutes the core of the coil 23 and magnetic fluxes are produced from the end 21a of the main magnetic pole 21 to form a strong magnetic distribution in an area P on the magnetic disk 2 near the auxiliary magnetic pole 24.

A gap smaller than the diameter of a light beam applied through the light applying aperture 12a is provided between the end 21a of the main magnetic pole 21 and the parallel portion 24a of the auxiliary magnetic pole 24, and the optical component 25 is provided in the gap. The optical component 25 has a three-layer structure in which a first element 251 made of a nonmagnetic material having a higher refractive index and melting point than those of the main magnetic pole 21 (for example Si with a layer thickness of 660 nm, n = 3.80, k = 0.01, and a melting point of 1, 420°C) is sandwiched between two second elements 252 made of a nonmagnetic material having a lower refractive index and a higher melting point than those of the first element 251 and the main magnetic pole 21 (for example SiO₂ with a layer thickness of 660 nm, n = 1.48, k = 0.0, and a melting point of 1, 730°C). The complex refractive index of a material is expressed herein as n - j · k, where n represents the real part, k represents the imaginary part, and j represents the imaginary unit.

The filling section 26 fills the space in the magnetic head 15 and also serves as a protection for the main magnetic pole 21, the auxiliary magnetic pole 24, and the optical component 25. The filling section 26 is made of a nonmagnetic material having a refractive index lower than that of the first element 251 but higher than that of the second element 252 and a higher melting point (for example TiO₂ with n = 2.56, k = 0.06, and a melting point of 1,840°C). In order to surely irradiate the optical component 25 with light transmitted through the light waveguide 12 and emitted through the light applying aperture 12a without refraction, the filling section 26 is preferably made of a material having a refractive index equivalent to that of a core (described later) through which the light travels in the waveguide 12.

When the optical component 25 is irradiated with light, plasmon is produced at the boundary between the first element 251 and the second element 252 because of the differences among the refractive indexes of the main magnetic pole 21, the optical component 25, and the filling section 26. As a result, the optical component 25 emits near-field light toward the magnetic disk 2. As stated above, the end 21a of the magnetic pole 21 emits magnetic flux forming a strong magnetic field intensity distribution in the area P on the magnetic disk 2 near the auxiliary magnetic pole 24. However, the optical component 25 can apply the near-field light highly accurately to the area P to which a strong magnetic field is applied, because the optical component 25 is provided between the main magnetic pole 21 and the auxiliary magnetic pole 24.

According to the first embodiment, the main magnetic pole 21 and the optical component 25 are fabricated as an integral part and therefore the near-field light can be applied with high precision to a position where the magnetic field is to be applied. A method for fabricating the main magnetic pole 21 and the optical component 25 and features of their shapes will be described below.

In fabrication of the magnetic head 15 of the first embodiment, the optical component 25 film is first formed by a technique such as lithography prior to the formation of the main magnetic pole 21, which is formed by using a conventional method for manufacturing a magnetic head.

Then, the main magnetic pole 21 film is formed on the optical component 25 and the ends of the main magnetic pole 21 and the optical component 25 that face the magnetic disk 2 are subjected to a cutting process using such a device as FIB (Focus Ion Beam) device at a time. This cutting process determines the width of the main magnetic pole 21 in the direction across tracks.

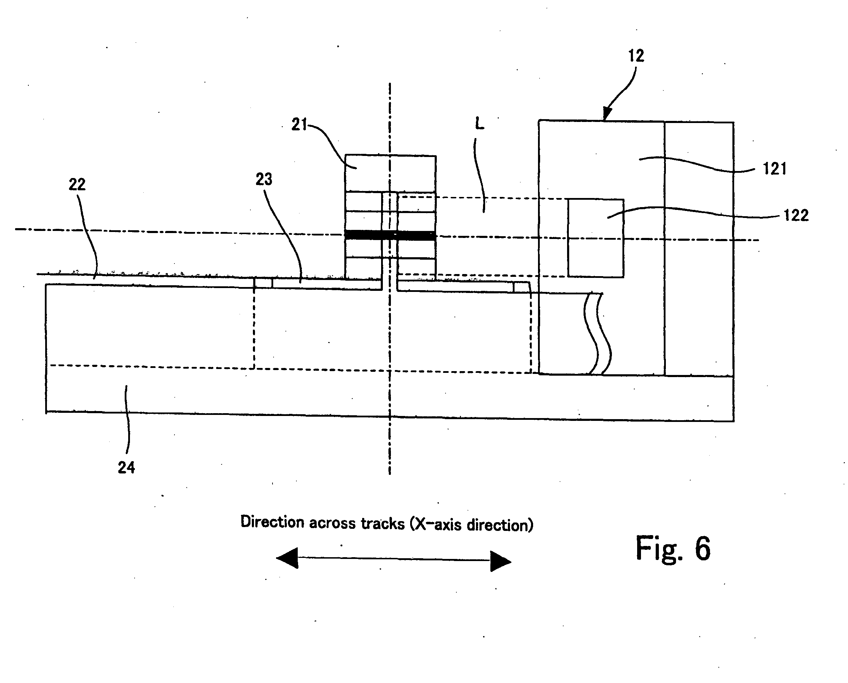

Fig. 6 shows an example of the cutting process of the magnetic pole and the optical component.

In the first embodiment, the side of the end portion of the main magnetic pole 21 and the optical component 25 that is irradiated with light L transmitted though the light waveguide 12 is formed as a flat surface parallel to the track scan direction in such a manner that the height of the flat surface from the bottom surface of the magnetic head 15 (the surface facing the magnetic disk 2) is not less than 1/√2 of the diameter of the beam of light L. By irradiating such a flat surf ace with light L, near-field light can be efficiently produced by the optical component 25 and stray light of the near-field light can be reduced.

The side of the main magnetic pole 21 and the optical component 25 that is not irradiated with light L is formed in such a manner that its end is thinner than the remaining portion. By forming the main magnetic pole 21 in this manner, magnetic fields can be applied to miniature areas on the magnetic disk 2 with a high degree of precision and reduction in the intensity of the magnetic fields can be minimized.

With the cutting process as shown in Fig. 6, a spot size irradiated with the near-field light from the optical component 25 that is equal to or smaller than the width of the main magnetic pole 21 in the direction across the tracks can be achieved and therefore the region to which a magnetic field is applied by the main magnetic pole 21 can be irradiated with the near-field light with a high degree of precision. Furthermore, according to this embodiment, conventional magnetic disk fabrication methods can be utilized without requiring major modifications, by additionally forming the optical component 25 prior to the formation of the main magnetic pole 21. In addition, the embodiment does not require the step of aligning the position to which light is applied with the position to which the magnetic field is to be applied, because the main magnetic pole 21 and the optical component 25 are subjected to the cutting process at a time.

Light L applied to the optical component 25 and the light waveguide 12 guiding the light L will be described below.

As shown in Fig. 4, the side of the main magnetic pole 21 and the optical component 25 that is irradiated with light L is formed as a flat surface parallel to the track scan direction. The greater the incident angle of the light L to the flat surface, the higher the efficiency of transformation from the light L to near-field light. The highest transformation efficiency can be achieved when the light L is applied perpendicularly to the flat surface. However, in order to apply light L perpendicularly to the optical component 25, its optical axis must be set at the bottom surface of the magnetic head 15. In practice, it is difficult to produce such light L. According to this embodiment, therefore, light L having the main polarization direction identical to the direction across the tracks (X-direction) is applied to the optical component 25 at an incident angle of approximately 45 degrees.

As shown in Fig. 6, the light waveguide 12 provided for transmitting light to the light applying aperture 12a consists of a core 122 through which light L emitted from the light source 6 shown in Fig. 1 is transmitted and a clad 121 that surrounds the core 122 and confines the light. The light waveguide 12 is provided on the side opposite to the side on which the coil lead 22 is drawn out as shown in Fig. 3, rather than the side on which the coil 23 is provided. Because the coil 23 has a thickness on the order of microns, the space saved by the coil 23 can be exploited to form the core 122 and clad 121 to a sufficient thickness. By using the light waveguide 12 having the sufficiently thick core 122 and clad 121, a loss of light caused by absorption can be reduced and therefore the amount of light emitted from the light source 6 can be reduced, thereby minimizing heating of the magnetic head 15. The core 122 of the light waveguide 12 may be made of an optically transparent material with a high refractive index, such as Ta₂O₅. The clad 122 may be made of a material with a lower refractive index than that of the core 122, such as SiO₂.

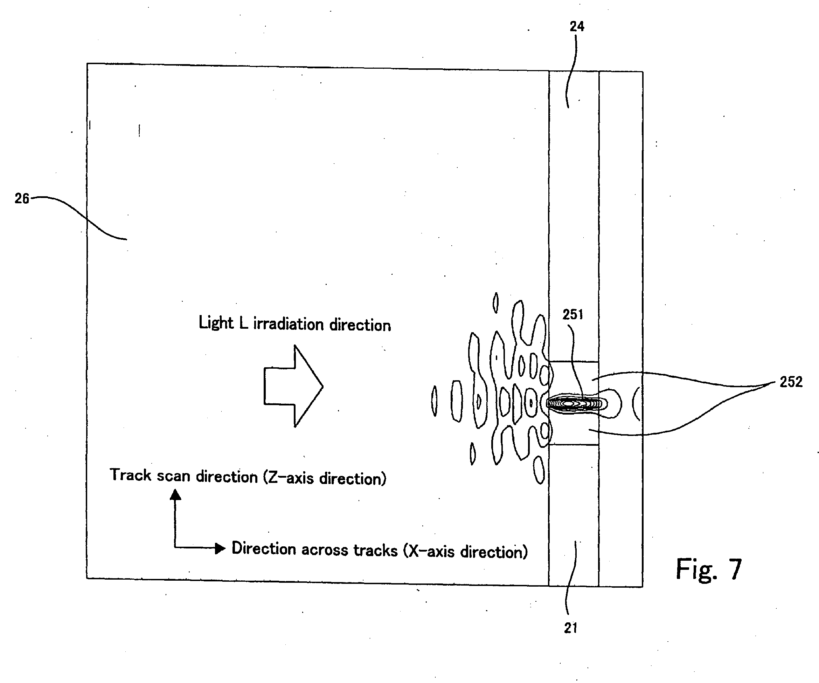

Fig. 7 shows a result of a simulation of an electromagnetic field intensity distribution in this embodiment.

Fig. 7 shows an electromagnetic field intensity distribution at a point 3 nm away from the magnetic head 15 viewed from the magnetic disk 2 when the distance between the magnetic head 15 and the magnetic disk 2 is 10 nm.

In this simulation model, the magnetic material of the main magnetic pole 21 and the auxiliary magnetic pole 24 is Fe (n = 2.36, k = 3, 27, and the melting point is 1,730°C), the material of the first element 251 is Si (n = 3.84, k = 0. 016, and the melting point is 1, 420°C), the material of the second element 252 is SiO₂ (n = 1.48, k = 0.0, and the melting point is 1,730°C), the material of the filling section 26 is TiSO₂ (n=2.56, k = 0.06, and the melting point is 1,840°C). The dimensions of the simulation model is as follows: the combined width of the main magnetic pole 21 and the optical component 25 in the direction across the tracks is 320 nm, the thickness of the first element 251 in the track scan direction is 40 nm, and the thickness of the second element 252 in the track scan direction is 240 nm. Light L has a wavelength of λ = 660 nm and arrives at the end of the first element 251 at an incident angle of 45°.

As can be seen from Fig. 7, the peak of the electromagnetic filed intensity appears in the portion of the first element 251 that is narrower than the wavelength of the light L. The peak intensity is 119 [(v/m)²].

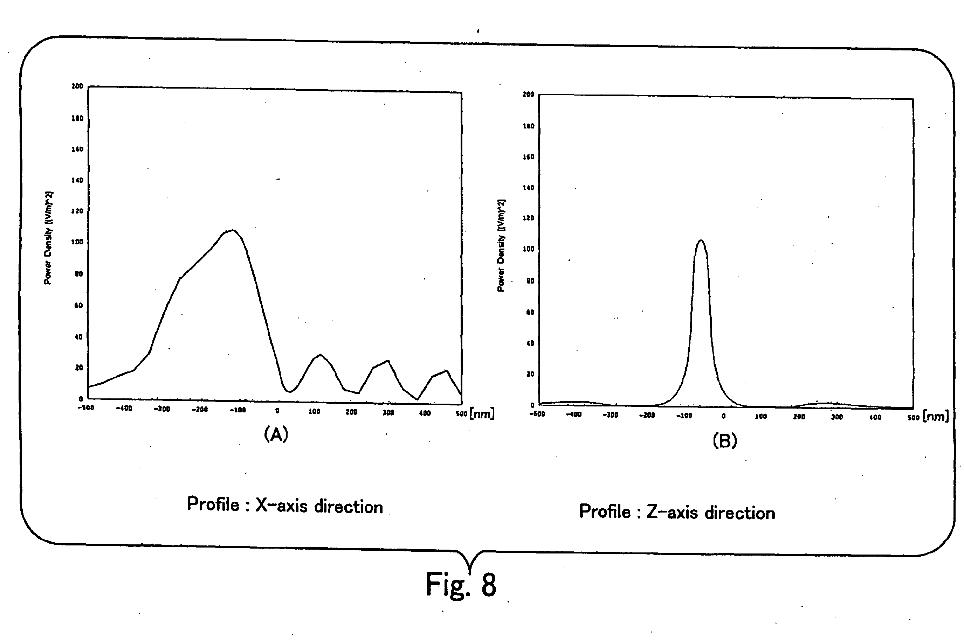

Fig. 8 is a graph showing a spot profile (intensity distribution) of near-field light on the same plane as that in Fig. 7.

The horizontal axis of the graph in part (A) of Fig. 8 represents the position of the magnetic head 15 in the direction across the tracks (X-axis direction); the horizontal axis of the graph in part (B) of Fig. 8 represents the position of the magnetic head 15 in the track scan direction (Z-axis direction). The vertical axes of these graphs represent the light intensity.

The near-field light in this simulation model is 60 nm in full width at half maximum in the track scan direction (Z-axis direction) and 240 nm in the direction across the tracks (X-axis direction). The electric-field amplitude of the light source 6 in the simulation model used in the calculation is 1 [(V/m)²].

Thus, according to the first embodiment, the magnetic disk 2 can be irradiated with a small light spot as shown in Fig. 8 and with an intense near-field light as shown in Fig. 7. Consequently, the light is concentrated on a one-bit size point and the position irradiated with the light is sufficiently close to the position to which the electric field is to be applied. Therefore, information can be written and read at a high density.

According to the first embodiment, only the thin optical component 25 is added to a conventional magnetic head and little modification is made to the shape and configuration of the remaining components. Because the modification to the manufacturing process is small, the performance of the reproducing section made of a GMR film and the like can be maintained without degradation.

Now, a second embodiment of the present invention will be described next. The second embodiment of the present invention is approximately the same as that of the first embodiment, except for the shapes of the auxiliary magnetic pole and optical component. Therefore like elements are labeled with like reference characters, the description of which will be omitted and only the differences from the first embodiment will be described.

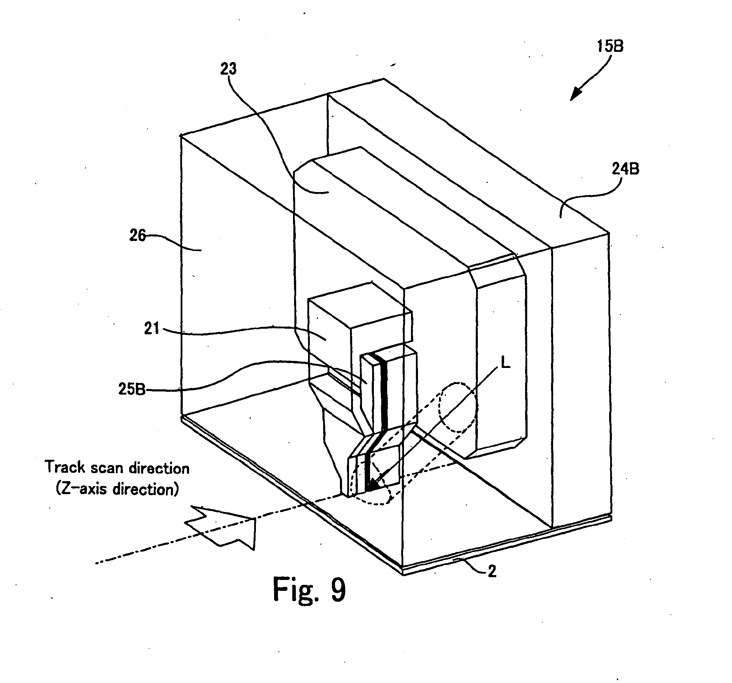

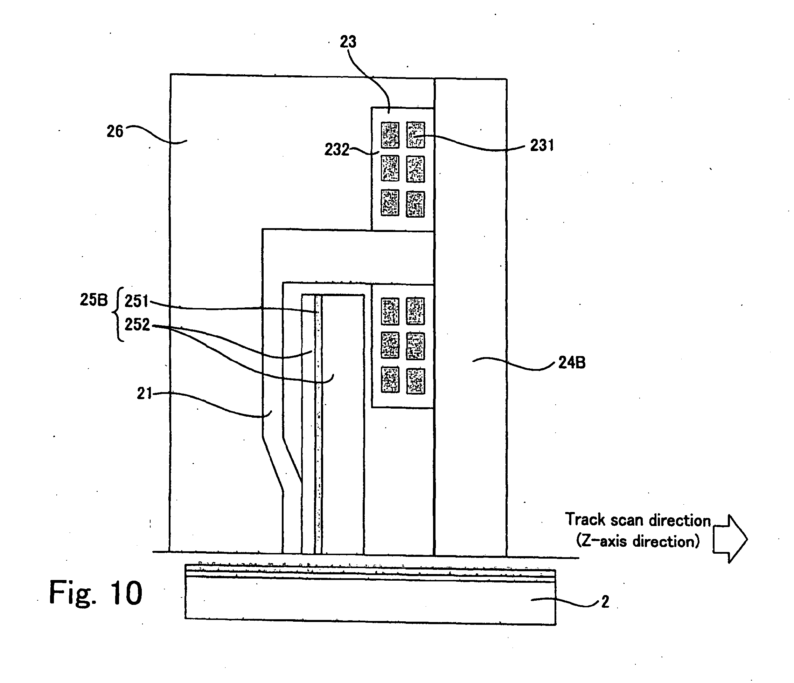

Fig. 9 is a perspective view schematically showing a magnetic head 15B according to the second embodiment. Fig. 10 is a cross-sectional view of the magnetic head 15B taken along the plane that is parallel to the track scan direction and passes through its main magnetic pole 21.

As shown in Fig. 9, the magnetic head 15B according to the second embodiment has an approximately the same configuration as that of the magnetic head 15 according to the first embodiment shown in Fig. 4, except that the auxiliary magnetic pole 24B of the magnetic head 15B according to the second embodiment includes only a vertical section orthogonal to the track scan direction. In addition, the first element 251 (see Fig. 10) in the optical component 25B of the magnetic head 15B of the second embodiment is positioned closer to the main magnetic pole 21 as shown in Fig. 10.

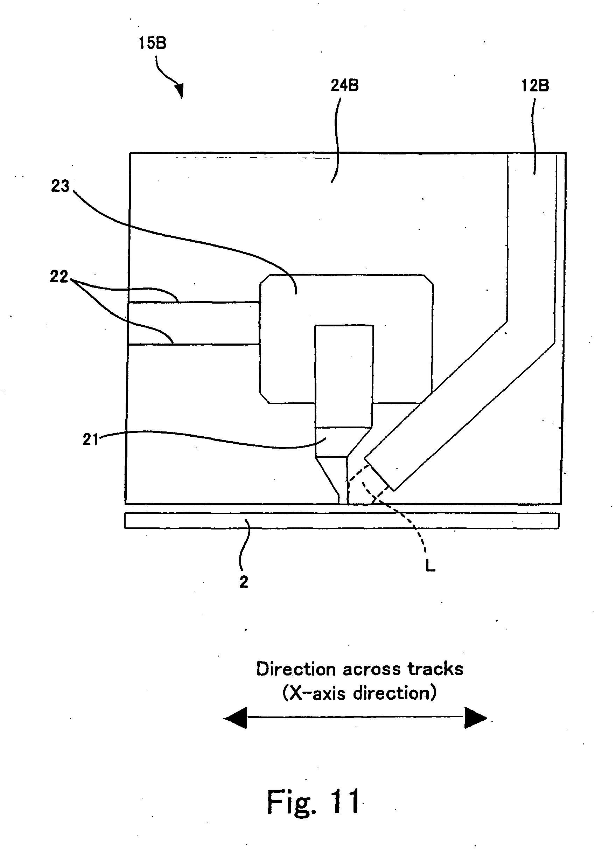

Fig. 11 schematically shows the configuration of the magnetic head 15B viewed from the back in the track scan direction.

In the magnetic head 15B of the second embodiment, the parallel portion 24a (see Fig. 5) is not provided in the auxiliary magnetic pole 24B. Accordingly, a light waveguide 12B can be extended to a position close to the end of the main magnetic pole 21 where the optical component 25B is provided. As a result, light L is efficiently applied to the optical component 25B.

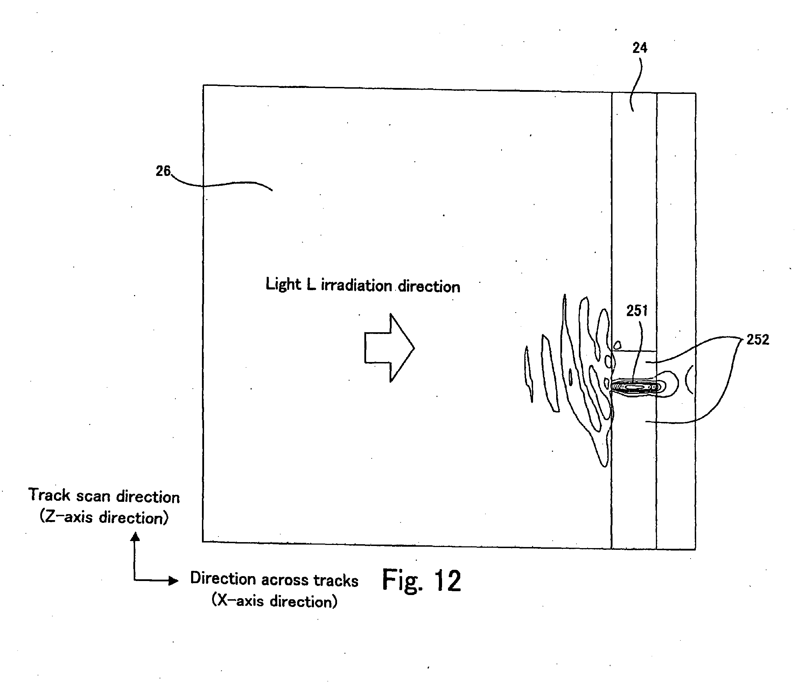

Fig. 12 shows a result of a simulation of an electromagnetic field intensity distribution in the second embodiment of the present invention.

The components of the simulation model are made of materials similar to those in the simulation model of the first embodiment shown in Fig. 7. The first element 251 is 40 nm thick in the track scan direction and the second element 252 is 240 nm thick in the part closer to the main magnetic pole 21 in the track scan direction and 1,120 nm thick in the part farther from the main magnetic pole 21.

In Fig. 12, the near-field light has the peak strength of 97 [(V/m)²], indicating that a sufficiently intense near-field light is applied. Furthermore, the spot size of the near-field light on the same plane as that in Fig. 12 is 55 nm in the track scan direction (Z-axis direction) and 320 nm in the direction across the tracks (X-axis direction). Thus, the first element 251 can be efficiently irradiated with near-field light even though the first element 251 and the second element 252 are provided unevenly.

Up to this point, the second embodiment of the present invention has been described. A third embodiment of the present invention will be described next. The third embodiment of the present invention has an approximately the same configuration as that of the first embodiment. Therefore, like elements are labeled with like reference characters, the description of which will be omitted, and only the differences from the first embodiment will be described.

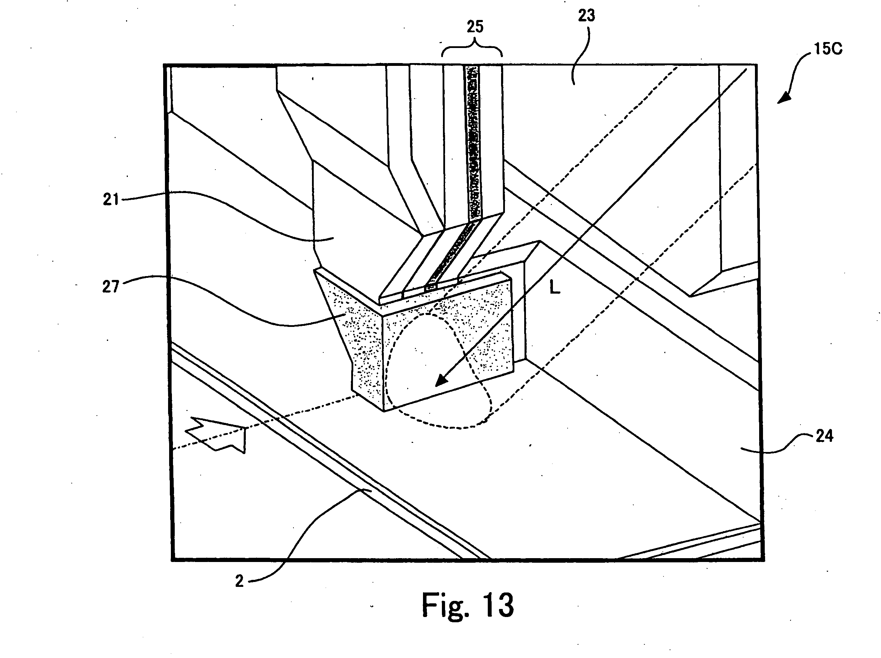

Fig. 13 is a schematic diagram showing a configuration of a portion around the end of a main magnetic pole 21 and an optical component 25 of a magnetic head 15C according to the third embodiment of the present invention.

The magnetic head 15C according to the third embodiment is approximately the same as the magnetic head 15 of the first embodiment shown in Fig. 4, except that the end of its main magnetic pole 21 and optical component 25 is covered with a thin film 27 with a thickness smaller than the wavelength of light. The thin film 27 has a refractive index lower than those of the main magnetic pole 21 and the filling section 26 and made of a transparent material. The thin film 27 represents an example of a coating film as called in the present invention.

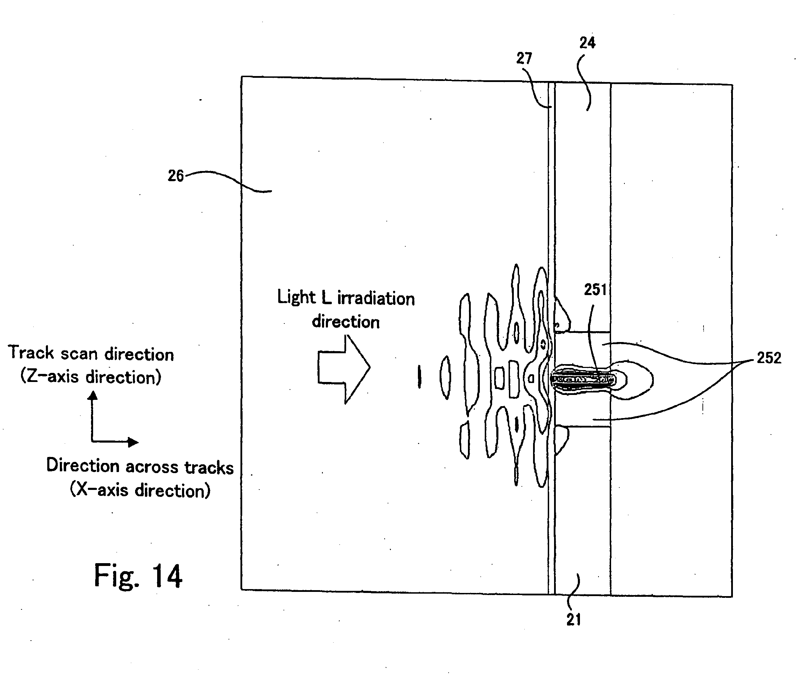

Fig. 14 shows a result of a simulation of an electromagnetic field intensity distribution in the third embodiment of the present invention.

The simulation model is the same as the one in the first embodiment shown in Fig. 7, except that the main magnetic pole 21 and the optical component 25 are covered with the thin film 27. The thin film 27 is made of SiO₂ (n = 1.48, k = 0.0, and the melting point is 1, 730°C), which is the same material of the second element 252 of the optical component 25, and has a thickness of 40 nm. In Fig. 14, the near-field light has a peak intensity of 152 [(V/m)²] and is 60 nm in full width at half maximum in the track scan direction and 300 nm in the direction across the tracks.

Because the main magnetic pole 21 and optical component 25 are covered with the thin film 27, the main magnetic pole 21 and optical component 25 are protected and near-filed light is generatedefficiently. In the simulationmodel of the third embodiment, the amount of near-filed light generated at the first element 251 can be increased by about 26% as compared with the simulation model in the first embodiment.

It should be noted, that if the thin film 27 is formed only on the two sides of the main magnetic pole 21 and optical component 25 in the direction across the tracks in the simulation model of the first embodiment shown in Fig. 7, rather than covering also the end of the main magnetic pole 21 and optical component 25 with the thin film 27 as shown in Fig. 13, two peak intensities of near-field light would appear. However, by reducing the width of the end of both main magnetic pole 21 and optical component 25 closer to the magnetic disk 2 in the direction across the tracks, the single peak intensity can be provided.

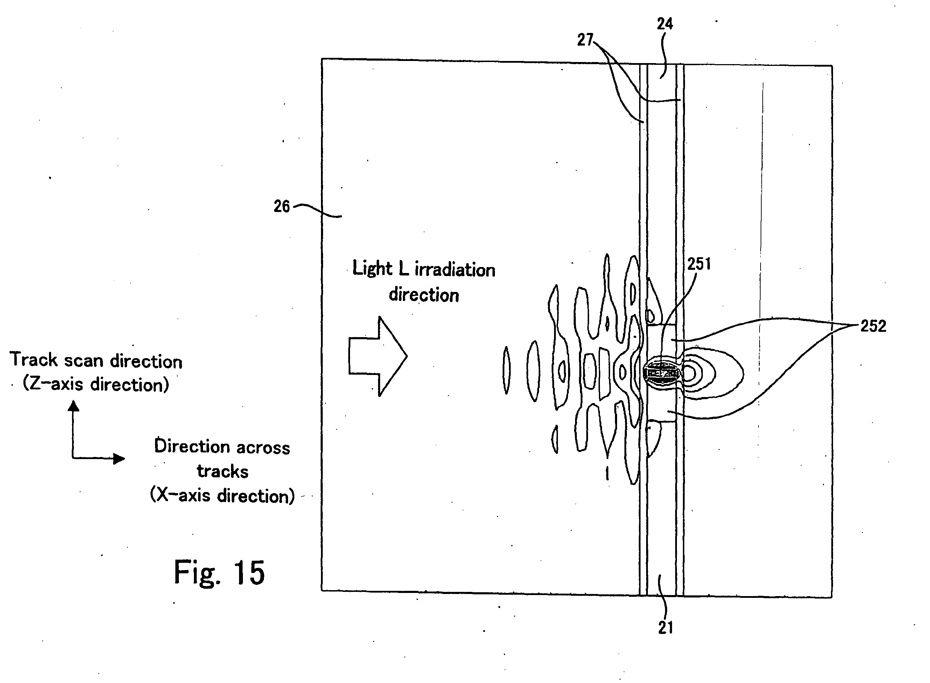

Fig. 15 shows a result of a simulation of an electromagnetic filed intensity distribution in the case where a thin film 27 is formed only the two sides of the main magnetic pole 21 and optical component 25 in the direction across the tracks.

The simulation model is the same as the one according to the first embodiment shown in Fig. 7, except that the width of the main magnetic pole 21 and the optical component 25 in the direction across the tracks is reduced to 160 nm and a film of SiO₂ having a thickness of 40 nm is formed on both sides of the main magnetic pole 21 and the optical component 25 in the direction across the tracks. In Fig. 15, the near-field light has a peak intensity of 192 [(V/m)²] and is 60 nm in half maximum in the track scan direction and 140 nm in the direction across the tracks.

Up to this point, the third embodiment of the present invention has been described. A fourth embodiment of the present invention will be described next. The fourth embodiment of the present invention is also approximately the same as that of the first embodiment. Therefore, like elements are labeled with like reference characters, the description of which will be omitted, and only the differences from the first embodiment will be described.

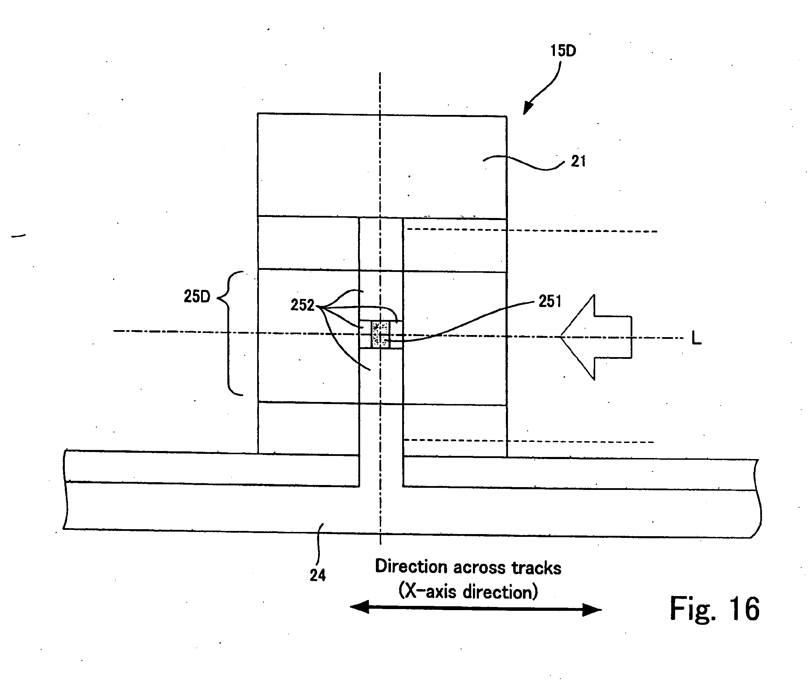

Fig. 16 schematically shows a configuration of a magnetic head 15D according to the fourth embodiment of the present invention viewed from the magnetic disk 2.

The first element 251 and the second element 252 of the optical component 25 of the magnetic head 15 according to the first embodiment shown in Fig. 4 are stacked in the track scan direction, whereas the second element 252 of the optical component 25 according to the fourth embodiment surrounds the first element 251. In addition, the width of the first element 251 in the direction across tracks is formed narrower than the width of the end of the main magnetic pole 21 so that the size of the generation spot of near-field light applied to the magnetic disk 2 is reduced.

In the magnetic head 15D, the second element 252 covers the first element 251 having a high refractive index and acts as the thin film 27 of the magnetic head 15C in the third embodiment shown in Fig. 13. In this way, the thin film with a low refractive index may cover the entire main magnetic pole 21 and optical component 25D or may cover only the optical component 25D. By forming the thin film only at the end to which light L is applied, the light can be efficiently coupled to the optical component 25 provided between the main magnetic pole 21 and the auxiliary magnetic pole 24 and thereby the efficiency of generation of near-field light can be increased.

Up to this point, the fourth embodiment of the present invention has been described. A fifth embodiment of the present invention will be described below. The fifth embodiment of the present invention also has a configuration approximately the same as that of the first embodiment. Therefore, like elements are labeled with like reference characters, the description of which will be omitted, and only the difference from the first embodiment will be described.

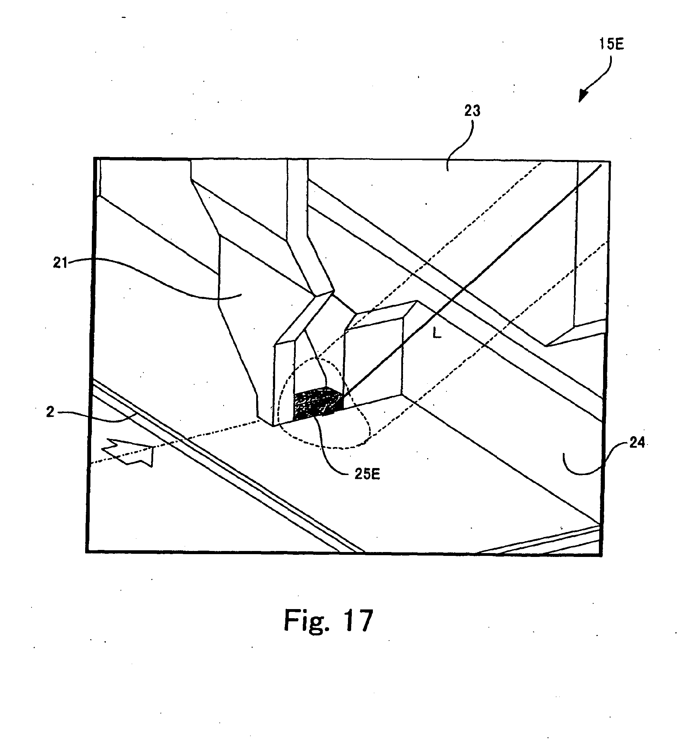

Fig. 17 is a schematic diagram showing a configuration of a portion around the end of the main pole 21 and optical component 25E of a magnetic head 15E according to the fifth embodiment of the present invention.

The magnetic head 15E of the fifth embodiment shown in Fig. 17 differs from the magnetic heads 15 according to the first to fourth embodiments described above in that its optical component 25E is made of a single material.

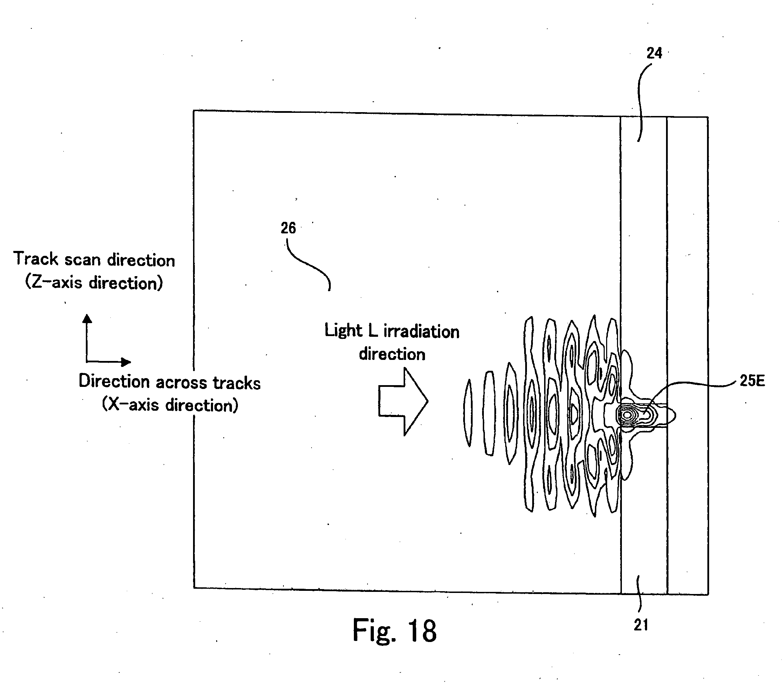

Fig. 18 shows a result of a simulation of an electromagnetic field intensity distribution in the fifth embodiment.

In this simulation model, the optical component 25E is 160 nm thick in the track scan direction (Z-axis direction), 320 nm thick in the direction across the tracks (X-axis direction), and 120 nm thick in the vertical direction (Y-axis direction).

In the model shown in Fig. 18, the peak intensity is 44 [(V/m)²], the spot size of the near-field light is 110 nm in the track scan direction (Z-axis direction) and 120 nm in the direction across the tracks (X-axis direction). In the single-layer optical component 25E, the region where the intensity peak appears extends in the track scan direction when compared with the optical component 25 shown in Fig. 7 which is made up of two layers having different refractive indexes. However, it has been shown that this extensity is practically insignificant.

Thus, the optical pole as called in the present invention preferably consists of multiple layers, though it may be made of a single layer.

Up to this point, the fifth embodiment of the present invention has been described. A sixth embodiment of the present invention will be described below. The same elements as those of the first embodiment shown in Fig. 2 are labeled with the same reference numeral, the description of which will be omitted, and only the differences will be described.

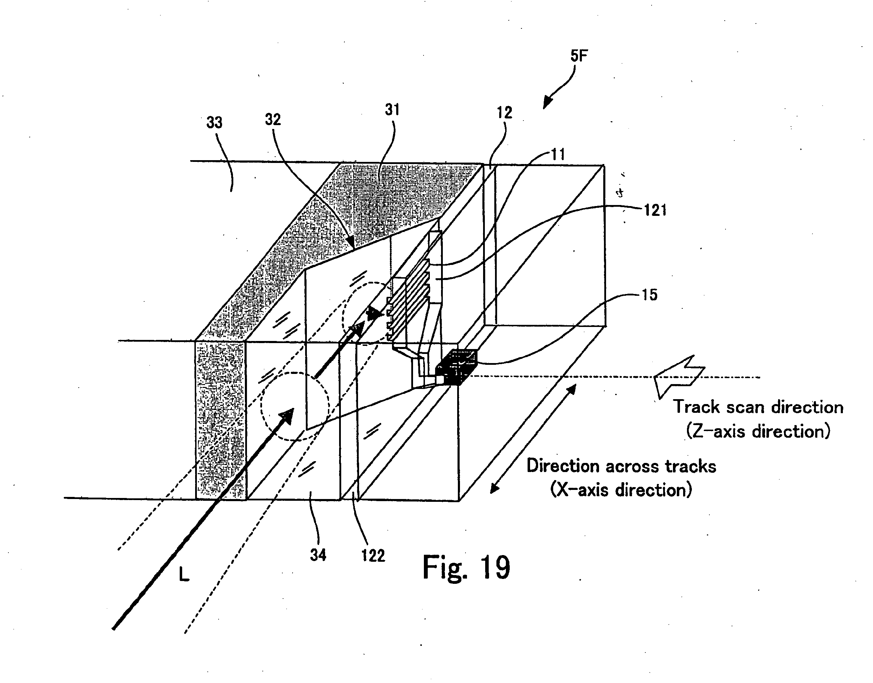

Fig. 19 shows a portion around the end of a slider 5F according to the sixth embodiment.

The slider 5F according to the sixth embodiment differs from the slider 5 of the first embodiment shown in Fig. 2 in that the magnetic head 15 is provided inside the slider 5F, rather than at its end. The slider 5F includes an AlTiC substrate 33 which constitutes the main body, a Si substrate 31 which reflects light, a transparent molded glass 34, and a light waveguide 12 consisting of a core 121 and a clad 122, all of which are stacked in this order from the forward end in the track scan direction. The magnetic head 15 is placed at the end of the light waveguide 12. A coupling grating 11 is provided in the core 121 of the light waveguide 12 and a mirror surface 32 is formed on the Si substrate 31 which reflects and guides light to the coupling grating 11. The Si substrate 31 represents an example of a Si substrate as called herein and the molded glass 34 represents an example of a molded glass as called herein. The mirror surface 32 represents an example of a mirror as called herein and also represents a Si mirror as called herein.

Light L emitted from a light source 6 (see Fig. 1) reaches the molded glass 34 and is then reflected by the mirror surface 32 and guided to the coupling grating 11. At the coupling grating 11, the light L is coupled into the light waveguide 12 consisting of the core 121 and the clad 122. The light L is transmitted through the light waveguide and is applied to the optical component 25 of the magnetic head 15. The configuration shown in Fig. 19 is effective if the coupling grating 11 cannot be provided at the end of the slider 5F because of a miniaturized size of the slider 5F or some other reason.

To fabricate the slider 5F shown in Fig. 19, the Si substrate 31 is attached to the AlTiC substrate 33 which constitutes the main body of the slider 5F. The Si substrate 31 is formed to the order of millimeters or submillimeters so that light L emitted from the light source 6 (see Fig. 1) provided externally to the slider 5F enters efficiently.

Then, the mirror surface 32 and other components are formed on the Si substrate 31 by wet anisotropic etching. A crystal orientation of Si is chosen beforehand such that light reflected off the surface formed using the wet etching is transmitted into the slider 5F.

Then, the transparent molded glass (low-melting glass) 34 is attached by pressure on the Si substrate 31 formed using the wet etching and unnecessary portions are smoothed by polishing. The molded glass is used because the diameter of the beam of light L entering the head 15 is in the order of millimeters or submillimeters, which makes it practically impossible to form the film using a physical or chemical film forming method.

After the molded glass 34 is provided, the coupling grating 11 is fabricated at the position to which light L transmitted through the molded glass 34 and reflected off the mirror surface 32 is guided. Then, on the coupling grating 11, the core 121 of the light waveguide 12 is formed of a material having a refractive index higher than that of the molded glass 34. The clad 122 is then formed on the core 121. The light waveguide 12 is of the order of micrometers in thickness and therefore can be formed by using a common film forming method. The clad 122 is smoothed and the magnetic head 15 is fabricated by using a lithography technology.

In this way, according to the sixth embodiment, the slider 5F can be readily manufactured through a simple process.

Recording media as referred to herein is recording media on which information is recorded by using light or heat in combination with magnetism. Recording media having either an in-plane magnetic recording film or a vertical magnetic recording film may be used with the present invention.

While examples have been described in which a GMR film is provided for reading information recorded on a magnetic disk, the method for reading information is not limited to a method using a magnetoresistive element. A method of detecting information optically may be used as well.

While examples have been described in which an optical component is fabricated in a layer different from the layer in which a coil is provided, the optical component may be fabricated in the same layer as the coil.

While light is transmitted to a position near the end of the optical pole through a light waveguide, light may be directly applied to the end of the optical pole through a lens system.

In the slider including a Si substrate and a molded glass, light is applied to the optical pole through the coupling grating and the light waveguide, light reflected off the Si mirror surface may be directly applied to a side of the optical pole without transmitting the light through them.

## Claims

1. A magnetic head (15) comprising:
a magnetic pole (21) which emits a magnetic flux from an end thereof;
an optical component (25) for producing near-field light from an end thereof aligned with the end of the magnetic pole (21) in a first direction, the optical component (25) being operable to emit said light in a second direction perpendicular to the first direction, and having a refractive index different from the refractive index of the magnetic pole (21); and
a light applying section (12a) for applying light to the end of the optical component (25);
**characterised in that** the light applying section (12a) is operable to apply light to the end of the optical component (25) in a direction having a component in a third direction perpendicular to the first and second directions.

2. The magnetic head according to claim 1, further comprising a filling section (26) which fills at least the optical-component-side portion of the space between the light applying section (12a) and the end of the optical component (25) and has a refractive index different from any of the refractive index of the magnetic pole (21) and the refractive index of the optical component (25).

3. The magnetic head (15) according to claim 1 or 2, wherein the end of the optical component (25) and the end of the magnetic pole (21) are positioned aligned with each other in the direction along tracks on a recording medium (2).

4. The magnetic head (15) according to any of the preceding claims, wherein the width of the end of the optical component (25) in the direction along the tracks on the recording medium (2) is less than the wavelength of light applied by the light applying section (12a).

5. The magnetic head (15) according to any of the preceding claims, wherein the width of the end of the optical component (25) in the direction across the tracks on the recording medium (2) is less than or equal to the width of the end of the magnetic pole (21).

6. The magnetic head (15) according to any of the preceding claims, wherein the optical component (25) comprises a layer of a high-refractive-index material (251) having a refractive index higher than the refractive index of the magnetic pole (21) and a layer of a low-refractive-index material (252) having a refractive index lower than the refractive index of the magnetic pole (21), the layers of the high-refractive-index material (251) and low-refractive index material (252) being stacked in the direction along the tracks on the recording medium (2).

7. The magnetic head (15) according to any of claims 1 to 5, wherein the optical component (25) comprises a layer of high-refractive-index material (251) having a refractive index higher than the refractive index of the magnetic pole (21) and a layer of a low-refractive-index material (252) having a refractive index lower than the refractive index of the magnetic pole (21), the layers of the high-refractive-index material (251) and the low-refractive-index material (252) being stacked in the direction along the tracks on the recording medium (2), the layer of the high-refractive-index material (251) being provided in a position in the optical component (25) that is nearer to the magnetic pole (21).

8. The magnetic head (15) according to any of claims 1 to 5, wherein the optical component (25) comprises a layer of a high-refractive-index material (251) having a refractive index higher than the refractive index of the magnetic pole (21) sandwiched between layers of a low-refractive index material (252) having a refractive index lower than the refractive index of the magnetic pole (21), the layers of the high-refractive-index material (251) and the low-refractive-index material (252) being stacked in the direction along the tracks on the recording medium (2).

9. The magnetic head (15) according to any of claims 1 to 5, wherein the optical component (25) comprises a layer of a high-refractive-index material (251) having a refractive index higher than the refractive index of the magnetic pole (21) that extends in the end of the optical component (25) along the end of the optical component (25) and a layer of a low-refractive-index material (252) having a refractive index lower than the refractive index of the magnetic pole (21) that surrounds the high-refractive-index material (251) in all directions except the direction in which the layer of the high-refractive-index material (251) extends.

10. The magnetic head (15) according to claim 2 or any claim dependent thereon, further comprising a covering section which covers a side onto which light is applied by the light applying section (12a), has a thickness less than the wavelength of the light, and has a refractive index lower than any of the refractive index of the magnetic pole (21) and the refractive index of the filling section (26),
wherein the filling section (26) fills the space between the light applying section (12a) and the covering section.

11. The magnetic head (15) according to any of the preceding claims, wherein the portion of the optical component (25) onto which light is applied by the light applying section (12a) is a flat surface.

12. The magnetic head (15) according to any of the preceding claims, wherein a portion of the end of the magnetic pole (21) is tapered down from the portion where light is applied to the optical component (25).

13. The magnetic head (15) according to any of the preceding claims, wherein the light applying section (12a) is operable to apply light polarized in the direction across the tracks on the recording medium (2).

14. The magnetic head (15) according to any of the preceding claims, further comprising a light leading section (11, 12) operable to take in and lead light to the light applying section (12a).

15. The magnetic head (15) according to any of the preceding claims, further comprising a grating (11) operable to receive irradiation of light and to take in the light, and a waveguide (12) operable to guide the light taken in by the grating to the light applying section (12a).

16. The magnetic head (15) according to any of the preceding claims, further comprising a mirror (32) operable to reflect light,
wherein the light applying section (12a) is operable, directly or indirectly, to apply light reflected by the mirror (32) to the end of the optical component (25).

17. The magnetic head (15) according to claim 16, further comprising a Si mirror (32) which is formed by etching a Si substrate (31) and is operable to reflect light; and
molded glass (34) which fills the etched portion of the Si substrate (31);
wherein the light applying section (12a) is operable, directly or indirectly, to apply light reflected by the Si mirror (32) to the end of the optical component (25).

18. An information storage apparatus comprising:
a magnetic head (15) operable to write information to, and read information from, an information recording medium (2) by using light and a magnetic field;
a medium supporting section operable to support the information recording medium (2); and
a head supporting section operable to support the magnetic head (15) and to position the magnetic head above the information recording medium (2);
**characterised in that** the magnetic head (15) is the magnetic head (15) of any of the preceding claims.

19. The magnetic head (15) as claimed in claim 1, further comprising:
a magnetic field generating section including a main magnetic pole (21), an auxiliary magnetic pole (24), and a coil (23) having a terminal section; and
a light leading section (11, 12) operable to take in and lead light to the light applying section (12a); wherein
the main magnetic pole (21) is the magnetic pole (21) of claim 1;
the optical component (25) is provided between the main magnetic pole (21) and the auxiliary magnetic pole (24) and has a refractive index different from any of the refractive index of the main magnetic pole (21) and the refractive index of the auxiliary magnetic pole (24); and
the magnetic field generating section, the terminal section, the optical component (25), the light applying section (12a), and the light leading section (11, 12) are provided on the same side of a given substrate.

20. The information storage apparatus according to claim 18, the magnetic head (15) further comprising:
a magnetic field generating section including a main magnetic pole (21), an auxiliary magnetic pole (24), and a coil (23) having a terminal section; and
a light leading section (11, 12) operable to take in and lead light to the light applying section (12a); wherein
the main magnetic pole (21) is the magnetic pole (21) of claim 1;
the optical component (25) is provided between the main magnetic pole (21) and the auxiliary magnetic pole (24) and has a refractive index different from any of the refractive index of the main magnetic pole (21) and the refractive index of the auxiliary magnetic pole (24); and
the magnetic field generating section, the terminal section, the optical component (25), the light applying section (12a), and the light leading section (11, 12) are provided on the same side of a given substrate.

## Patentansprüche

1. Ein Magnetkopf (15), umfassend:
einen Magnetpol (21), welcher einen magnetischen Fluss aus einem Ende davon emittiert;
eine optische Komponente (25) zum Erzeugen von Nahfeldlicht aus einem Ende davon, welche mit dem Ende des Magnetpols (21) in einer ersten Richtung ausgerichtet ist, wobei die optische Komponente (25) betriebsfähig ist, um das Licht in eine zweite Richtung zu emittieren, welche senkrecht zu der ersten Richtung ist, und einen Brechungsindex besitzt, welcher sich von dem Brechungsindex des Magnetpols (21) unterscheidet; und
einen Lichtaufbringungsabschnitt (12a) zum Aufbringen von Licht auf das Ende der optischen Komponente (25);
**dadurch gekennzeichnet, dass** der Lichtaufbringungsabschnitt (12a) betriebsfähig ist, um Licht auf das Ende der optischen Komponente (25) in einer Richtung aufzubringen, welche eine Komponente in einer dritten Richtung besitzt, die senkrecht zu der ersten und der zweiten Richtung ist.

2. Der Magnetkopf nach Anspruch 1, des weiteren umfassend einen Füllabschnitt (26), welcher mindestens den Teilbereich auf der Seite der optischen Komponente des Raums zwischen dem Lichtaufbringungsabschnitt (12a) und dem Ende der optischen Komponente (25) füllt und einen Brechungsindex besitzt, welcher sich von jedem des Brechungsindex des Magnetpols (21) und des Brechungsindex der optischen Komponente (25) unterscheidet.

3. Der Magnetkopf (15) nach Anspruch 1 oder 2, worin das Ende der optischen Komponente (25) und das Ende des Magnetpols (21) miteinander ausgerichtet in der Richtung entlang von Tracks auf einem Aufzeichnungsmedium (2) positioniert sind.

4. Der Magnetkopf (15) nach einem der vorhergehenden Ansprüche, worin die Breite des Endes der optischen Komponente (25) in der Richtung entlang der Tracks auf dem Aufzeichnungsmedium (2) geringer ist als die Wellenlänge von Licht, welches durch den Lichtaufbringungsabschnitt (12a) aufgebracht wird.

5. Der Magnetkopf (15) nach einem der vorhergehenden Ansprüche, worin die Breite des Endes der optischen Komponente (25) in der Richtung quer über die Tracks auf dem Aufzeichnungsmedium (2) geringer oder gleich der Breite des Endes des Magnetpols (21) ist.

6. Der Magnetkopf (15) nach einem der vorhergehenden Ansprüche, worin die optische Komponente (25) eine Schicht aus einem Material (251) mit hohem Brechungsindex, welches einen Brechungsindex besitzt, der höher ist als der Brechungsindex des Magnetpols (21), und eine Schicht aus einem Material (252) mit niedrigem Brechungsindex umfasst, welches einen Brechungsindex besitzt, der niedriger ist als der Brechungsindex des Magnetpols (21), wobei die Schichten aus dem Material (251) mit hohem Brechungsindex und dem Material (252) mit niedrigem Brechungsindex in der Richtung entlang der Tracks auf dem Aufzeichnungsmedium (2) gestapelt sind.

7. Der Magnetkopf (15) nach einem der Ansprüche 1 bis 5, worin die optische Komponente (25) eine Schicht aus einem Material (251) mit hohem Brechungsindex, welches einen Brechungsindex besitzt, der höher ist als der Brechungsindex des Magnetpols (21), und eine Schicht aus einem Material (252) mit niedrigem Brechungsindex umfasst, welches einen Brechungsindex besitzt, der niedriger ist als der Brechungsindex des Magnetpols (21), wobei die Schichten aus dem Material (251) mit hohem Brechungsindex und dem Material (252) mit niedrigem Brechungsindex in der Richtung entlang der Tracks auf dem Aufzeichnungsmedium (2) gestapelt sind, und wobei die Schicht aus dem Material (251) mit hohem Brechungsindex in einer Position in der optischen Komponente (25) vorgesehen ist, welche näher an dem Magnetpol (21) ist.

8. Der Magnetkopf (15) nach einem der Ansprüche 1 bis 5, worin die optische Komponente (25) eine Schicht aus einem Material (251) mit hohem Brechungsindex umfasst, welches einen Brechungsindex besitzt, der höher ist als der Brechungsindex des Magnetpols (21), welche zwischen Schichten aus einem Material (252) mit niedrigem Brechungsindex eingelegt ist, welches einen Brechungsindex besitzt, der niedriger ist als der Brechungsindex des Magnetpols (21), wobei die Schichten aus dem Material (251) mit hohem Brechungsindex und dem Material (252) mit niedrigem Brechungsindex in der Richtung entlang der Tracks auf dem Aufzeichnungsmedium (2) gestapelt sind.

9. Der Magnetkopf (15) nach einem der Ansprüche 1 bis 5, worin die optische Komponente (25) eine Schicht aus einem Material (251) mit hohem Brechungsindex, welches einen Brechungsindex besitzt, der höher ist als der Brechungsindex des Magnetpols (21), welcher sich in dem Ende der optischen Komponente (25) entlang dem Ende der optischen Komponente (25) erstreckt, und eine Schicht aus einem Material (252) mit niedrigem Brechungsindex umfasst, welches einen Brechungsindex besitzt, der niedriger ist als der Brechungsindex des Magnetpols (21), welcher das Material (251) mit hohem Brechungsindex in allen Richtungen bis auf die Richtung umgibt, in welche sich die Schicht aus dem Material (251) mit hohem Brechungsindex erstreckt.

10. Der Magnetkopf (15) nach Anspruch 2 oder einem Anspruch, der davon abhängig ist, des Weiteren umfassend einen Abdeckungsabschnitt, welcher eine Seite abdeckt, auf welche Licht durch den Lichtaufbringungsabschnitt (12a) aufgebracht wird, eine Dicke geringer als die Wellenlänge des Lichts besitzt und einen Brechungsindex niedriger als jeder des Brechungsindex des Magnetpols (21) und des Brechungsindex des Füllabschnitts (26) besitzt,
worin der Füllabschnitt (26) den Raum zwischen dem Lichtaufbringungsabschnitt (12a) und dem Abdeckungsabschnitt füllt.

11. Der Magnetkopf (15) nach einem der vorhergehenden Ansprüche, worin der Teilbereich der optischen Komponente (25), auf welche Licht durch den Lichtaufbringungsabschnitt (12a) aufgebracht wird, eine ebene Oberfläche ist.

12. Der Magnetkopf (15) nach einem der vorhergehenden Ansprüche, worin ein Teilbereich des Endes des Magnetpols (21) von dem Teilbereich ab, in dem Licht auf die optische Komponente (25) aufgebracht wird, nach unten spitz zulaufend ist.

13. Der Magnetkopf (15) nach einem der vorhergehenden Ansprüche, worin der Lichtaufbringungeabschnitt (12a) betriebsfähig ist, um Licht aufzubringen, welches in der Richtung quer über die Tracks auf dem Aufzeichnungsmedium (2) polarisiert ist.

14. Der Magnetkopf (15) nach einem der vorhergehenden Ansprüche, des Weiteren umfassend einen Lichtleitungsabschnitt (11, 12), welcher betriebsfähig ist, um Licht zu erfassen und zu dem Lichtaufbringungsabschnitt (12a) zu leiten.

15. Der Magnetkopf (15) nach einem der vorhergehenden Ansprüche, des Weiteren umfassend ein Gitter (11), welches betriebsfähig ist, um eine Lichtstrahlung zu empfangen und das Licht zu erfassen, und einen Wellenleiter (12), welcher betriebsfähig ist, um das Licht, welches durch das Gitter erfasst wurde, zu dem Lichtaufbringungsabschnitt (12a) zu leiten.

16. Der Magnetkopf (15) nach einem der vorhergehenden Ansprüche, des Weiteren umfassend einen Spiegel (32), welcher betriebsfähig ist, um Licht zu reflektieren,
worin der Lichtaufbringungsabschnitt (12a) betriebsfähig ist, direkt oder indirekt, um Licht, welches durch den Spiegel (32) reflektiert wird, auf das Ende der optischen Komponente (25) aufzubringen.

17. Der Magnetkopf (15) nach Anspruch 16, des Weiteren umfassend einen Si-Spiegel (32), welcher durch Ätzen eines Si-Substrats (31) geformt ist und betriebsfähig ist, um Licht zu reflektieren; und
Pressglas (34), welches den geätzten Teilbereich des Si-Substrats (31) füllt;
worin der Lichtaufbringungsabschnitt (12a) betriebsfähig ist, direkt oder indirekt, um Licht, welches durch den Si-Spiegel (32) reflektiert wird, auf das Ende der optischen Komponente (25) aufzubringen.

18. Ein Informationsspeichergerät, umfassend:
einen Magnetkopf (15), welcher betriebsfähig ist, um Information auf ein Informationsaufzeichnungsmedium (2) zu schreiben und Information davon zu lesen, indem Licht und ein Magnetfeld verwendet werden;
einen Mediumalagerungsabschnitt, welcher betriebsfähig ist, um das Informationsaufzeichnungsmedium (2) zu lagern; und
einen Kopflagerungsabschnitt, welcher betriebsfähig ist, um den Magnetkopf (15) zu lagern und um den Magnetkopf über dem Informationsaufzeichnungsmedium (2) zu positionieren;
**dadurch gekennzeichnet, dass** der Magnetkopf (15) der Magnetkopf (15) nach einem der vorhergehenden Ansprüche ist.

19. Der Magnetkopf (15) nach Anspruch 1, des Weiteren umfassend:
einen Erzeugungsabschnitt für ein Magnetfeld, umfassend einen Hauptmagnetpol (21), einen Zusatzmagnetpol (24) und eine Spule (23), welche einen Anschlussabschnitt besitzt; und
einen Lichtleitabschnitt (11, 12), welcher betriebsfähig ist, um Licht zu erfassen und zu dem Lichtaufbringungsabschnitt (12a) zu leiten; worin
der Hauptmagnetpol (21) der Magnetpol (21) des Anspruchs 1 ist;
die optische Komponente (25) zwischen dem Hauptmagnetpol (21) und dem Zusatzmagnetpol (24) vorgesehen ist und einen Brechungsindex besitzt, der sich von jedem des Brechungsindex des Hauptmagnetpols (21) und des Brechungsindex des Zusatzmagnetpols (24) unterscheidet; und
der Erzeugungsabschnitt für ein Magnetfeld, der Anschlussabschnitt, die optische Komponente (25), der Lichtaufbringungsabschnitt (12a) und der Lichtleitabschnitt (11, 12) auf der gleichen Seite eines gegebenen Substrats vorgesehen sind.

20. Das Informationsspeichergerät nach Anspruch 18, wobei der Magnetkopf (15) des Weiteren umfasst:
einen Erzeugungsabschnitt für ein Magnetfeld, umfassend einen Hauptmagnetpol (21), einen Zusatzmagnetpol (24) und eine Spule (23), welche einen Anschlussabschnitt besitzt; und
einen Lichtleitabschnitt (11, 12), welcher betriebsfähig ist, um Licht zu erfassen und zu dem Lichtaufbringungsabschnitt (12a) zu leiten; worin
der Hauptmagnetpol (21) der Magnetpol (21) des Anspruchs 1 ist;
die optische Komponente (25) zwischen dem Hauptmagnetpol (21) und dem Zusatzmagnetpol (24) vorgesehen ist und einen Brechungsindex besitzt, der sich von jedem des Brechungsindex des Hauptmagnetpols (21) und des Brechungsindex des Zusatzmagnetpols (24) unterscheidet; und
der Erzeugungsabschnitt für ein Magnetfeld, der Anschlussabschnitt, die optische Komponente (25), der Lichtaufbringungsabschnitt (12a) und der Lichtleitabschnitt (11, 12) auf der gleichen Seite eines gegebenen Substrats vorgesehen sind.

## Revendications

1. Tête magnétique (15) comportant :
un pôle magnétique (21) qui émet un flux magnétique depuis une de ses extrémités ;
un élément optique (25) pour produire une lumière de champ proche depuis une de ses extrémités alignée avec l'extrémité du pôle magnétique (21) dans une première direction, l'élément optique (25) permettant d'émettre ladite lumière dans une seconde direction perpendiculaire à la première direction, et possédant un indice de réfraction différent de l'indice de réfraction du pôle magnétique (21); et
une section d'application de lumière (12a) pour appliquer une lumière à l'extrémité de l'élément optique (25) ;
**caractérisée en ce que** la section d'application de lumière (12a) permet d'appliquer une lumière à l'extrémité de l'élément optique (25) dans une direction présentant un élément dans une troisième direction perpendiculaire aux première et seconde directions.

2. Tête magnétique selon la revendication 1, comportant en outre une section de remplissage (26) qui remplit au moins la partie côté élément optique de l'espace entre la section d'application de lumière (12a) et l'extrémité de l'élément optique (25) et possède un indice de réfraction différent de l'un quelconque de l'indice de réfraction du pôle magnétique (21) et de l'indice de réfraction de l'élément optique (25).

3. Tête magnétique (15) selon la revendication 1 ou 2, dans laquelle l'extrémité de l'élément optique (25) et l'extrémité du pôle magnétique (21) sont positionnées alignées l'une avec l'autre dans la direction le long des pistes sur un support d'enregistrement (2).

4. Tête magnétique (15) selon l'une quelconque des revendications précédentes, dans laquelle la largeur de l'extrémité de l'élément optique (25) dans la direction le long des pistes sur le support d'enregistrement (2) est inférieure à la longueur d'onde de la lumière appliquée par la section d'application de lumière (12a).

5. Tête magnétique (15) selon l'une quelconque des revendications précédentes, dans laquelle la largeur de l'extrémité de l'élément optique (25) dans la direction transversale aux pistes sur le support d'enregistrement (2) est inférieure ou égale à la largeur de l'extrémité du pôle magnétique (21).

6. Tête magnétique (15) selon l'une quelconque des revendications précédentes, dans laquelle l'élément optique (25) comprend une couche d'un matériau à indice de réfraction élevé (251) possédant un indice de réfraction supérieur à l'indice de réfraction du pôle magnétique (21) et une couche de matériau à indice de réfraction faible (252) possédant un indice de réfraction inférieur à l'indice de réfraction du pôle magnétique (21), les couches du matériau à indice de réfraction élevé (251) et du matériau à indice de réfraction faible (252) étant empilées dans la direction le long des pistes sur le support d'enregistrement (2).

7. Tête magnétique (15) selon l'une quelconque des revendications 1 à 5, dans laquelle l'élément optique (25) comprend une couche de matériau à indice de réfraction élevé (251) possédant un indice de réfraction supérieur à l'indice de réfraction du pôle magnétique (21) et une couche d'un matériau à indice de réfraction faible (252) possédant un indice de réfraction inférieur à l'indice de réfraction du pôle magnétique (21), les couches du matériau à indice de réfraction élevé (251) et du matériau à indice de réfraction faible (252) étant empilées dans la direction le long des pistes sur le support d'enregistrement (2), la couche de matériau à indice de réfraction élevé (251) étant prévue dans une position dans l'élément optique (25) qui est plus proche du pôle magnétique (21).

8. Tête magnétique (15) selon l'une quelconque des revendications 1 à 5, dans laquelle l'élément optique (25) comprend une couche de matériau à indice de réfraction élevé (251) possédant un indice de réfraction supérieur à la indice de réfraction du pôle magnétique (21) pris en sandwich entre les couches d'un matériau à indice de réfraction faible (252) possédant un indice de réfraction inférieur à l'indice de réfraction du pôle magnétique (21), les couches du matériau à indice de réfraction élevé (251) et du matériau à indice de réfraction faible (252) étant empilées dans la direction le long des pistes sur le support d'enregistrement (2).

9. Tête magnétique (15) selon l'une quelconque des revendications 1 à 5, dans laquelle l'élément optique (25) comprend une couche d'un matériau à indice de réfraction élevé (251) possédant un indice de réfraction supérieur à l'indice de réfraction du pôle magnétique (21) qui s'étend dans l'extrémité de l'élément optique (25) le long de l'extrémité de l'élément optique (25) et une couche d'un matériau à indice de réfraction faible (252) possédant un indice de réfraction inférieur à l'indice de réfraction du pôle magnétique (21) qui entoure le matériau à indice de réfraction élevé (251) dans toutes les directions sauf dans la direction dans laquelle la couche du matériau à indice de réfraction élevé (251) s'étend.

10. Tête magnétique (15) selon la revendication 2 ou une revendication quelconque en dépendant, comportant en outre une section de recouvrement qui recouvre un côté sur lequel la lumière est appliquée par la section d'application de lumière (12a), possède une épaisseur inférieure à la longueur d'onde de la lumière, et possède un indice de réfraction inférieur à l'un quelconque de l'indice de réfraction du pôle magnétique (21) et de l'indice de réfraction de la section de remplissage (26),
dans laquelle la section de remplissage (26) remplit l'espace entre la section d'application de lumière (12a) et la section de recouvrement.

11. Tête magnétique (15) selon l'une quelconque des revendications précédentes, dans laquelle la partie de l'élément optique (25) sur laquelle la lumière est appliquée par la section d'application de lumière (12a) est une surface plane.

12. Tête magnétique (15) selon l'une quelconque des revendications précédentes, dans laquelle une partie de l'extrémité du pôle magnétique (21) est effilée vers le bas à partir de la partie où la lumière est appliquée à l'élément optique (25).

13. Tête magnétique (15) selon l'une quelconque des revendications précédentes, dans laquelle la section d'application de lumière (12a) permet d'appliquer de la lumière polarisée dans la direction transversale aux pistes sur le support d'enregistrement (2).

14. Tête magnétique (15) selon l'une quelconque des revendications précédentes, comportant en outre une section de guidage de lumière (11, 12) permettant de prélever et de guider la lumière vers la section d'application de lumière (12a).

15. Tête magnétique (15) selon l'une quelconque des revendications précédentes, comportant en outre un réseau (11) permettant de recevoir un rayonnement de lumière et de prélever la lumière, et un guide d'onde (12) permettant de guider la lumière prélevée par le réseau vers la section d'application de lumière (12a).

16. Tête magnétique (15) selon l'une quelconque des revendications précédentes, comportant en outre un miroir (32) permettant de réfléchir la lumière,
dans laquelle la section d'application de lumière (12a) permet, directement ou indirectement, d'appliquer la lumière réfléchie par le miroir (32) à l'extrémité de l'élément optique (25).

17. Tête magnétique (15) selon la revendication 16, comportant en outre un miroir Si (32) qui est formé en gravant un substrat Si (31) et permet de réfléchir la lumière ; et
un verre moulé (34) qui remplit la partie gravée du substrat Si (31) ;
dans laquelle la section d'application de lumière (12a) permet, directement ou indirectement, d'appliquer la lumière réfléchie par le miroir Si (32) à l'extrémité de l'élément optique (25).

18. Appareil de stockage d'informations comportant :
une tête magnétique (15) permettant d'écrire des informations sur, et de lire des informations depuis, un support d'enregistrement d'information (2) en utilisant la lumière et un champ magnétique ;
une section supportant le support permettant de supporter le support d'enregistrement d'information (2) ; et
une section supportant la tête permettant de supporter la tête magnétique (15) et de positionner la tête magnétique au-dessus du support d'enregistrement d'information (2) ;
**caractérisé en ce que** la tête magnétique (15) est la tête magnétique (15) selon l'une quelconque des revendications précédentes.

19. Tête magnétique (15) selon la revendication 1, comportant en outre :
une section générant un champ magnétique comprenant un pôle magnétique principal (21), un pôle magnétique auxiliaire (24), et une bobine (23) possédant une section terminale ; et
une section de guidage de lumière (11, 12) permettant de prélever et de guider la lumière vers la section d'application de lumière (12a) ; où
le pôle magnétique principal (21) est le pôle magnétique (21) selon la revendication 1 ;
l'élément optique (25) est prévu entre le pôle magnétique principal (21) et le pôle magnétique auxiliaire (24) et possède un indice de réfraction différent de l'un quelconque de l'indice de réfraction du pôle magnétique principal (21) et de l'indice de réfraction du pôle magnétique auxiliaire (24) ; et
la section de génération de champ magnétique, la section terminale, l'élément optique (25), la section d'application de lumière (12a), et la section de guidage de lumière (11, 12) sont prévus sur le même côté d'un substrat donné.

20. Appareil de stockage d'informations selon la revendication 18, la tête magnétique (15) comportant en outre :
une section de génération de champ magnétique comprenant un pôle magnétique principal (21), un pôle magnétique auxiliaire (24), et une bobine (23) possédant une section terminale ; et
une section de guidage de lumière (11, 12) permettant de prélever et de guider la lumière vers la section d'application de lumière (12a) ; où
le pôle magnétique principal (21) est le pôle magnétique (21) selon la revendication 1 ;
l'élément optique (25) est prévu entre le pôle magnétique principal (21) et le pôle magnétique auxiliaire (24) et possède un indice de réfraction différent de l'un quelconque de l'indice de réfraction du pôle magnétique principal (21) et de l'indice de réfraction du pôle magnétique auxiliaire (24) ; et
la section de génération de champ magnétique, la section terminale, l'élément optique (25), la section d'application de lumière (12a), et la section de guidage de lumière (11, 12) sont prévus sur le même côté d'un substrat donné.
